(19) Europäisches Patentamt / European Patent Office / Office européen des brevets

(11) **EP 4 556 596 A1**

(12) **EUROPEAN PATENT APPLICATION**
published in accordance with Art. 153(4) EPC

(43) Date of publication:
**21.05.2025 Bulletin 2025/21**

(21) Application number: **23839610.5**

(22) Date of filing: **10.07.2023**

(51) International Patent Classification (IPC):
$C25B\ 15/00^{(2006.01)}$    $C25B\ 1/04^{(2021.01)}$
$C25B\ 1/46^{(2006.01)}$    $C25B\ 9/00^{(2021.01)}$
$C25B\ 15/023^{(2021.01)}$    $G05B\ 19/418^{(2006.01)}$

(52) Cooperative Patent Classification (CPC):
C25B 15/02; C25B 1/04; C25B 1/46; C25B 9/00;
C25B 9/70; C25B 15/00; C25B 15/023;
C25B 15/027; C25B 15/029; G05B 19/418

(86) International application number:
**PCT/JP2023/025501**

(87) International publication number:
**WO 2024/014438 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.07.2022 JP 2022113607**

(71) Applicant: **Asahi Kasei Kabushiki Kaisha
Tokyo 1000006 (JP)**

(72) Inventors:
• **SUZUKI Yuto
Tokyo 100-0006 (JP)**
• **SASAKI Takeaki
Tokyo 100-0006 (JP)**
• **ISHII Akihito
Tokyo 100-0006 (JP)**

(74) Representative: **Hoffmann Eitle
Patent- und Rechtsanwälte PartmbB
Arabellastraße 30
81925 München (DE)**

(54) **OPERATION SUPPORT DEVICE, OPERATION SUPPORT METHOD AND OPERATION SUPPORT PROGRAM**

(57)    Provided is an operation support apparatus including: a calculation unit which calculates, based on an electricity cost or an amount of power consumption for each of predetermined times associated with operation of a plurality of electrolyzers operating in parallel, an amount of production of a product for each of the times that satisfies a target amount of production of the product, the product being produced by the plurality of electrolyzers over a predetermined period of time; and a specification unit which specifies an electrolyzer to be operated among the plurality of electrolyzers, based on the amount of production calculated by the calculation unit. The calculation unit may calculate the amount of production that satisfies the target amount of production of the product over the period of time and minimizes an electricity cost or an amount of power consumption over the period of time.

FIG.5

**Description**

BACKGROUND

1. TECHNICAL FIELD

The present invention relates to an operation support apparatus, an operation support method, and an operation support program.

2. RELATED ART

Patent Document 1 describes that "The production cost of a product is reduced without reducing the production amount of a product of the electrolytic apparatus in a fixed period." (ABSTRACT).

Prior Art Document

Patent Document

Patent Document 1: International Publication No. 2019/059321

TECHNICAL PROBLEM

An amount of production of a product produced by an electrolyzer may depend on performance of the electrolyzer. The performance of the electrolyzer may decrease with operation time of the electrolyzer. If a plurality of electrolyzers operating in parallel produce the product, an amount of production of the product produced by each of the plurality of electrolyzers may differ from electrolyzer to electrolyzer. An amount of power consumed by an electrolyzer with its performance decreased tends to be greater than an amount of power consumed by an electrolyzer with its performance less decreased than the electrolyzer with its performance decreased. Therefore, in an electrolytic apparatus including a plurality of electrolyzers, it is desirable to suppress power consumed by the plurality of electrolyzers while ensuring that a total amount of the product produced by the plurality of electrolyzers satisfies a target amount of production.

GENERAL DISCLOSURE

A first aspect of the present invention provides an operation support apparatus. The operation support apparatus includes: a calculation unit which calculates, based on an electricity cost or an amount of power consumption for each of predetermined times associated with operation of a plurality of electrolyzers operating in parallel, an amount of production of a product for each of the predetermined times that satisfies a target amount of production of the product, the product being produced by the plurality of electrolyzers over a predetermined period of time; and a specification unit which specifies an electrolyzer to be operated among the plurality of electrolyzers, based on the amount of production calculated by the calculation unit.

The calculation unit may calculate the amount of production that satisfies the target amount of production of the product over the predetermined period of time and minimizes an electricity cost or an amount of power consumption over the predetermined period of time.

The operation support apparatuses according to any of the above descriptions may further include a determination unit. The calculation unit may calculate, for each of the predetermined times, a first value of current to be applied to the plurality of electrolyzers, based on the amount of production of the product. The calculation unit may calculate a second value of current to be applied to the plurality of electrolyzers, based on an impurity concentration in the product or on a temperature of an electrolytic solution decomposed by the electrolyzers. The determination unit may determine a magnitude relation between the first value of current and the second value of current for each of the predetermined times calculated by the calculation unit, and determine a magnitude relation between the first value of current for each of the predetermined times and a predetermined fourth value of current to be applied to the plurality of electrolyzers. If the determination unit determines that the first value of current is equal to or smaller than the fourth value of current and determines that the first value of current is smaller than the second value of current during a first time which is at least one of the predetermined times, or if the determination unit determines that the first value of current is equal to or greater than the second value of current and determines that the first value of current is greater than the fourth value of current during a second time which is at least one of the predetermined times, the specification unit may specify an electrolyzer to be stopped among the plurality of electrolyzers.

A second aspect of the present invention provides an operation support apparatus. The operation support apparatus includes: a calculation unit which calculates, based on an amount of power consumption for each of predetermined times associated with operation of a plurality of electrolyzers operating in parallel, an amount of production of the product for each of the predetermined times of a product produced by the plurality of electrolyzers over a predetermined period of time that satisfies a target amount of production of the product, calculates, for each of the predetermined times, a first value of current to be applied to the plurality of electrolyzers, based on the amount of production that has been calculated, and calculates a second value of current to be applied to the plurality of electrolyzers, based on an impurity concentration in the product or on a temperature of an electrolytic solution decomposed by the electrolyzers; a determination unit which determines a magnitude relation between the first value of current and the second value of current for each of the predetermined times calculated by the calculation unit, and determines a magnitude relation between the first value of current for each of the predetermined times and a predetermined fourth value of current to be applied to the plurality of electrolyzers; and a specification unit which specifies an electrolyzer to be stopped among the plurality of electrolyzers, if the determination unit determines that the first value of current is equal to or smaller than the fourth value of current and determines that the first value of current is smaller than the second value of current during a first time which is at least one of the predetermined times, or if the determination unit determines that the first value of current is equal to or greater than the second value of current and determines that the first value of current is greater than the fourth value of current during a second time which is at least one of the predetermined times.

The operation support apparatuses according to any of the above descriptions may further include a control unit which controls currents flowing through the plurality of electrolyzers. If the determination unit determines that the first value of current is equal to or greater than the second value of current and is equal to or smaller than a fourth value of current, the control unit may control the currents flowing through the plurality of electrolyzers to the first value of current.

In the operation support apparatuses according to any of the above descriptions, the determination unit may acquire a time elapsed since it was determined that the first value of current is equal to or greater than the second value of current and is equal to or smaller than the fourth value of current. The determination unit may determine a magnitude relation between the time elapsed and a predetermined time. If the determination unit determines that the time elapsed is longer than the predetermined time, the control unit may output information related to whether operation conditions of the plurality of electrolyzers are to be changed.

In the operation support apparatuses according to any of the above descriptions, if the determination unit determines that the first value of current is smaller than the second value of current during the first time and determines that the first value of current is greater than the fourth value of current during the second time, the calculation unit may further calculate, for each of the predetermined times, the value of current to be applied to the plurality of electrolyzers by setting the currents flowing through the plurality of electrolyzers during the first time to the second value of current or by setting the currents flowing through the plurality of electrolyzers during the second time to the fourth value of current.

In the operation support apparatuses according to any of the above descriptions, the determination unit may determine a magnitude relation between a first difference between the second value of current and the first value of current during the first time, and a second difference between the first value of current and the fourth value of current during the second time. If the determination unit determines that the first difference is greater than the second difference, the calculation unit may further calculate, for each of the predetermined times, the value of current by setting the currents flowing through the plurality of electrolyzers during the first time to the second value of current, and if it is determined that the second difference is greater than the first difference, the calculation unit may further calculate, for each of the predetermined times, the value of current by setting the currents flowing through the plurality of electrolyzers during the second time to the fourth value of current.

The operation support apparatuses according to any of the above descriptions may further include a control unit which controls currents flowing through the plurality of electrolyzers. The calculation unit may further calculate, for each of the predetermined times, a third value of current for a case where the one electrolyzer has been stopped. The determination unit may determine a magnitude relation between the third value of current and the fourth value of current. If the determination unit determines that the third value of current is equal to or smaller than the fourth value of current, the control unit may control the currents flowing through the plurality of electrolyzers to the third value of current.

In the operation support apparatuses according to any of the above descriptions, the determination unit may further determine a magnitude relation between the third value of current and the second value of current. If the determination unit determines that the third value of current is equal to or smaller than the fourth value of current and is equal to or greater than the second value of current, the control unit may control the currents flowing through the plurality of electrolyzers to the third value of current.

In the operation support apparatuses according to any of the above descriptions, if the determination unit determines that the third value of current is smaller than the second value of current during at least one of the predetermined times, the specification unit may further specify another electrolyzer to be stopped among the plurality of electrolyzers.

In the operation support apparatuses according to any of the above descriptions, the calculation unit may further calculate, for each of the predetermined times, a value of current for a case where the one electrolyzer and the another electrolyzer have been stopped, as the third value of current.

In the operation support apparatuses according to any of the above descriptions, if the specification unit specifies all of the plurality of electrolyzers as electrolyzers to be stopped, the calculation unit may further calculate, for each of the predetermined times, the value of current to be applied to the plurality of electrolyzers by setting the currents flowing through the plurality of electrolyzers to the second value of current or the fourth value of current.

In the operation support apparatuses according to any of the above descriptions, if the determination unit determines that the third value of current is greater than the fourth value of current during at least one of the predetermined times, the calculation unit may further calculate, for each of the predetermined times, the value of current to be applied to the plurality of electrolyzers by setting the currents flowing through the plurality of electrolyzers during at least one of the predetermined times to the fourth value of current.

In the operation support apparatuses according to any of the above descriptions, the determination unit may determine whether a concentration of the product in an aqueous solution of the product is higher than a predetermined first concentration, and may determine whether the impurity concentration in the product is lower than a predetermined second concentration. If the determination unit determines that the concentration of the product is higher than the first concentration and is lower than the second concentration, the control unit may control a current flowing through the one electrolyzer to be smaller than a current flowing through another of the electrolyzers.

In the operation support apparatuses according to any of the above descriptions, the determination unit may determine a magnitude relation between the amount of power consumption for each of the predetermined times and an available amount of power supply to the electrolyzers for each of the predetermined times. The calculation unit may calculate an amount of surplus power that is a difference between the available amount of power supply and the amount of power consumption, during one of the times for which it is determined that the amount of power consumption is smaller than the available amount of power supply. The control unit may control power supplied to the electrolyzers to be power including the amount of surplus power, during another of the times for which it is determined that the amount of power consumption is equal to or greater than the available amount of power supply.

The operation support apparatuses according to any of the above descriptions may further include a display unit which displays an amount of power consumption.

A third aspect of the present invention provides an operation support method. The operation support method includes: performing first calculation by calculating, by a calculation unit and based on an electricity cost or an amount of power consumption for each of predetermined times associated with operation of a plurality of electrolyzers operating in parallel, an amount of production of a product for each of the predetermined times that satisfies a target amount of production of the product, the product being produced by the plurality of electrolyzers over a predetermined period of time; and specifying, by a specification unit, an electrolyzer to be operated among the plurality of electrolyzers, based on the amount of production calculated in the performing the first calculation.

The performing the first calculation may be calculating, by the calculation unit, the amount of production that satisfies the target amount of production of the product over the predetermined period of time and that minimizes an electricity cost or an amount of power consumption over the predetermined period of time.

The operation support method according to any of the above descriptions may further include: performing second calculation by calculating, by the calculation unit and for each of the predetermined times, a first value of current to be applied to the plurality of electrolyzers, based on the amount of production of the product; performing third calculation by calculating, by the calculation unit, a second value of current to be applied to the plurality of electrolyzers, based on an impurity concentration in the product or on a temperature of an electrolytic solution decomposed by the electrolyzers; performing first determination by determining, by a determination unit, a magnitude relation between the first value of current for each of the predetermined times calculated in the performing the second calculation and the second value of current calculated in the performing the third calculation; and performing second determination by determining, by the determination unit, a magnitude relation between the first value of current for each of the predetermined times calculated in the performing the second calculation and a predetermined fourth value of current to be applied to the plurality of electrolyzers, if it is determined, in the performing the first determination, that the first value of current during a first time which is at least one of the predetermined times is smaller than the second value of current. The specifying the electrolyzer may be specifying, by the specification unit, an electrolyzer to be stopped among the plurality of electrolyzers, if it is determined, in the performing the second determination, that the first value of current is equal to or smaller than the fourth value of current.

The operation support method according to any of the above descriptions may further include performing third determination by determining, by the determination unit, a magnitude relation between the first value of current for each of the predetermined times calculated in the performing the second calculation and a predetermined fourth value of current to be applied to the plurality of electrolyzers, if it is determined, in the performing the first determination, that the first value of current for each of the predetermined times is equal to or greater than the second value of current. The specifying the electrolyzer may be specifying, by the specification unit, one electrolyzer to be stopped among the plurality of electrolyzers, if it is determined, in the performing the third determination, that the first value of current during a second time which is at least one of the predetermined times is greater than the fourth value of current.

A fourth aspect of the present invention provides an operation support method. The operation support method includes: performing first calculation by calculating, by a calculation unit and based on an amount of power consumption for each of predetermined times associated with operation of a plurality of electrolyzers operating in parallel, an amount of production of a product for each of the predetermined times that satisfies a target amount of production of the product, the product being produced by the plurality of electrolyzers over a predetermined period of time; performing second calculation by calculating, by the calculation unit and for each of the predetermined times, a first value of current to be applied to the plurality of electrolyzers, based on the amount of production calculated in the performing the first calculation; performing third calculation by calculating, by the calculation unit, a second value of current to be applied to the plurality of electrolyzers, based on an impurity concentration in the product or on a temperature of an electrolytic solution decomposed by the electrolyzers; performing first determination by determining, by a determination unit, a magnitude relation between the first value of current for each of the predetermined times calculated in the performing the second calculation and the second value of current calculated in the performing the third calculation; performing second determination by determining, by the determination unit, a magnitude relation between the first value of current for each of the predetermined times calculated in the performing the second calculation and a predetermined fourth value of current to be applied to the plurality of electrolyzers, if it is determined, in the performing the first determination, that the first value of current during a first time which is at least one of the predetermined times is smaller than the second value of current; and specifying, by a specification unit, one electrolyzer to be stopped among the plurality of electrolyzers, if it is determined, in the performing the second determination, that the first value of current is equal to or smaller than the fourth value of current.

The operation support method according to any of the above descriptions may further include: performing third determination by determining, by the determination unit, a magnitude relation between the first value of current for each of the predetermined times calculated in the performing the second calculation and a predetermined fourth value of current to be applied to the plurality of electrolyzers, if it is determined, in the performing the first determination, that the first value of current for each of the predetermined times is equal to or greater than the second value of current; and specifying, by the specification unit, one electrolyzer to be stopped among the plurality of electrolyzers, if it is determined, in the performing the third determination, that the first value of current during a second time which is at least one of the predetermined times is greater than the fourth value of current.

The operation support method according to any of the above descriptions may further include controlling, by a control unit, currents flowing through the plurality of electrolyzers to the first value of current, if it is determined, in the performing the first determination, that the first value of current is equal to or greater than the second value of current and it is determined, in the performing the third determination, that the first value of current is equal to or smaller than the fourth value of current.

The operation support method according to any of the above descriptions may further include: acquiring, by the determination unit, a time elapsed since it was determined in the performing the third determination that the first value of current is equal to or smaller than the fourth value of current; determining a time by determining, by the determination unit, a magnitude relation between the time elapsed acquired in the acquiring the time elapsed and a predetermined time; and outputting, by the control unit, information related to whether operation conditions of the plurality of electrolyzers are to be changed, if it is determined, in the determining the time, that the time elapsed is longer than the predetermined time.

In the operation support method according to any of the above descriptions, the performing the second calculation may be further calculating, by the calculation unit and for each of the predetermined times, the value of current to be applied to the plurality of electrolyzers by setting the currents flowing through the plurality of electrolyzers during the first time to the second value of current or by setting the currents flowing through the plurality of electrolyzers during the second time to the fourth value of current, if it is determined, in the performing the first determination, that the first value of current during the first time is smaller than the second value of current and it is determined, in the performing the second determination, that the first value of current during the second time is greater than the fourth value of current.

The operation support method according to any of the above descriptions may further include performing fourth determination by determining, by the determination unit, a magnitude relation between a first difference between the second value of current and the first value of current during the first time, and a second difference between the first value of current and the fourth value of current during the second time. The performing the second calculation may be further calculating, by the calculation unit and for each of the predetermined times, the value of current by setting the currents flowing through the plurality of electrolyzers during the first time to the second value of current, if it is determined, in the performing the fourth determination, that the first difference is greater than the second difference. The performing the second calculation may be further calculating, by the calculation unit and for each of the predetermined times, the value of current by setting the currents flowing through the plurality of electrolyzers during the second time to the fourth value of current, if it is determined, in the performing the fourth determination, that the second difference is greater than the first difference.

The operation support method according to any of the above descriptions may further include: performing fourth calculation by further calculating, by the calculation unit and for each of the predetermined times, a third value of current for a case where the one electrolyzer specified in the specifying the electrolyzer has been stopped; performing second determination by determining, by the determination unit, a magnitude relation between the third value of current and the fourth value of current; and controlling, by a control unit, currents flowing through the plurality of electrolyzers to the third value of current, if it is determined, in the performing the second determination, that the third value of current is equal to or smaller than the fourth value of current.

The operation support method according to any of the above descriptions may further include performing sixth determination by determining, by the determination unit, a magnitude relation between the third value of current and the second value of current. The controlling may be controlling, by the control unit, the currents flowing through the plurality of electrolyzers to the third value of current, if it is determined, in the performing the fifth determination, that the third value of current is equal to or smaller than the fourth value of current and it is determined, in the performing the sixth determination, that the third value of current is equal to or greater than the second value of current.

In the operation support method according to any of the above descriptions, the specifying the electrolyzer may be further specifying, by the specification unit, another electrolyzer to be stopped among the plurality of electrolyzers, if it is determined, in the performing the sixth determination, that the third value of current during at least one of the predetermined times is smaller than the second value of current.

In the operation support method according to any of the above descriptions, the performing the fourth calculation may be further calculating, by the calculation unit and for each of the predetermined times, a value of current for a case where the one electrolyzer and the another electrolyzer have been stopped, as the third value of current.

In the operation support method according to any of the above descriptions, the performing the second calculation may be further calculating, by the calculation unit and for each of the predetermined times, the value of current to be applied to the plurality of electrolyzers by setting the currents flowing through the plurality of electrolyzers to the second value of current, if all of the plurality of electrolyzers are specified, in the specifying the electrolyzer, as electrolyzers to be stopped.

In the operation support method according to any of the above descriptions, the performing the second calculation may be further calculating, by the calculation unit and for each of the predetermined times, the value of current to be applied to the plurality of electrolyzers by setting the currents flowing through the plurality of electrolyzers during at least one of the predetermined times to the fourth value of current, if it is determined, in the performing the fifth determination, that the third value of current during the at least one of the predetermined times is greater than the fourth value of current.

The operation support method according to any of the above descriptions may further include performing seventh determination by determining, by the determination unit, whether a concentration of the product in an aqueous solution of the product is higher than a predetermined first concentration and whether an impurity concentration in the product is lower than a predetermined second concentration. The controlling may be controlling, by the control unit, a current flowing through the electrolyzer to be stopped that has been specified in the specifying the electrolyzer, to be smaller than a current flowing through another of the electrolyzers, if it is determined, in the performing the seventh determination, that the concentration of the product is higher than the first concentration and is lower than the second concentration.

The operation support method according to any of the above descriptions may further include: determining, by the determination unit, a magnitude relation between the amount of power consumption for each of the predetermined times and an available amount of power supply to the electrolyzers for each of the predetermined times; calculating, by the calculation unit, an amount of surplus power that is a difference between the available amount of power supply and the amount of power consumption, during one of the times for which it is determined that the amount of power consumption is smaller than the available amount of power supply; and controlling, by the control unit, power supplied to the electrolyzers to be power including the amount of surplus power, during another of the times for which it is determined that the amount of power consumption is equal to or greater than the available amount of power supply.

A fifth aspect of the present invention provides an operation support program. The operation support program causes a computer to function as an operation support apparatus.

The summary clause does not necessarily describe all necessary features of the embodiments of the present invention. The present invention may also be a sub-combination of the features described above.

BRIEF DESCRIPTION OF THE DRAWINGS

Fig. 1 is a diagram showing one example of an electrolytic apparatus 200 according to one embodiment of the present invention.
Fig. 2 is a view of the electrolytic apparatus 200 shown in Fig. 1 as viewed from the X axis direction.
Fig. 3 is a diagram showing one example of details of one electrolysis cell 91 in Fig. 2.
Fig. 4 is an enlarged view of a vicinity of an ion exchange membrane 84 in the electrolysis cell 91 shown in Fig. 3.

Fig. 5 is a diagram showing one example of a block diagram of an operation support apparatus 100 according to one embodiment of the present invention.

Fig. 6 is a conceptual diagram showing one example of support for operation of electrolyzers 90 by an operation support apparatus 100.

Fig. 7 is a diagram showing one example of a mode of display by a display unit 52.

Fig. 8 is a diagram showing another example of a mode of display by a display unit 52.

Fig. 9 is a diagram showing one example of a relationship between an electricity cost associated with operation of a plurality of electrolyzers 90 operating in parallel and a time T during which the plurality of electrolyzers 90 operate.

Fig. 10 is a diagram showing one example of an amount of power consumption Ec and an available amount of power supply Es for each time T.

Fig. 11 is a diagram illustrating currents and the like in a plurality of electrolyzers 90 in calculation by a calculation unit 10 (see Fig. 5) of an amount of production of a product P.

Fig. 12 is a diagram illustrating currents and the like in a plurality of electrolyzers 90 for a case where the plurality of electrolyzers 90 are integrated into one electrolyzer 90 in calculation by a calculation unit 10 (see Fig. 5) of an amount of production of a product P.

Fig. 13 is a diagram showing one example of a relationship between an amount of production Ac of a product P associated with operation of a plurality of electrolyzers 90 operating in parallel and a time T during which the plurality of electrolyzers 90 operate.

Fig. 14 is a diagram showing, for a plurality of current efficiencies CE, a relationship between a concentration of an alkali metal chloride in a liquid 75 (see Fig. 3) and a second value of current to be applied to electrolyzers 90.

Fig. 15 is a diagram showing one example of a first value of current Iv1 for each time T calculated by a calculation unit 10 (see Fig. 5).

Fig. 16 is a diagram showing another example of a first value of current Iv1 for each time T calculated by a calculation unit 10 (see Fig. 5).

Fig. 17 is a diagram showing one example of an amount of production Ac of a product P produced by each of a plurality of electrolyzers 90 during a time T2 (see Fig. 13).

Fig. 18 is a diagram showing one example of an amount of production Ac for a case where operation of an electrolyzer 90-1 has been stopped in the example shown in Fig. 17.

Fig. 19 is a flowchart showing one example of an operation support method according to one embodiment of the present invention.

Fig. 20 is a flowchart showing one example of an operation support method according to one embodiment of the present invention.

Fig. 21 is a flowchart showing one example of details of a stop step S200 in Fig. 19.

Fig. 22 is a flowchart showing one example of an operation support method according to one embodiment of the present invention.

Fig. 23 is a diagram showing one example of a computer 2200 in which an operation support apparatus 100 according to an embodiment of the present invention may be entirely or partially embodied.

DESCRIPTION OF EXEMPLARY EMBODIMENTS

Hereinafter, the invention will be described through embodiments of the invention, but the following embodiments do not limit the invention according to claims. In addition, not all of the combinations of features described in the embodiments are imperative to the solving means of the invention.

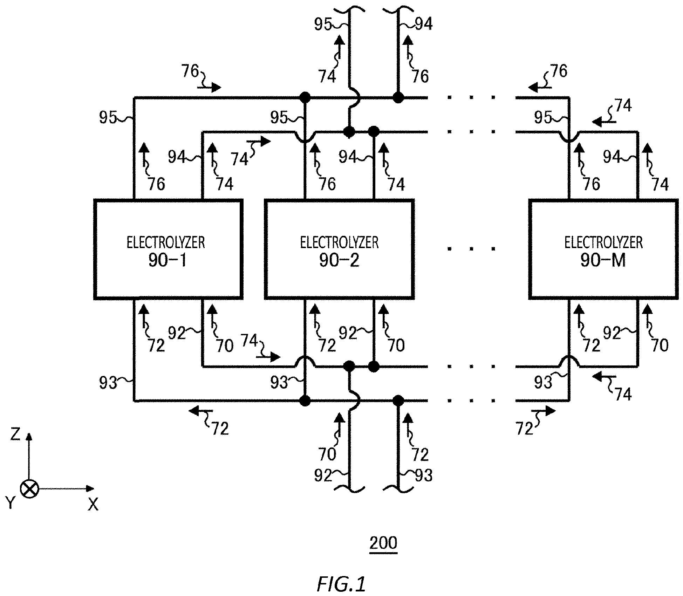

Fig. 1 is a diagram showing one example of an electrolytic apparatus 200 according to one embodiment of the present invention. The electrolytic apparatus 200 is an apparatus which electrolyzes an electrolytic solution. The electrolytic apparatus 200 includes a plurality of electrolyzers 90. In the present example, the electrolytic apparatus 200 includes electrolyzers 90-1 to 90-M (M is an integer equal to or greater than 2).

The plurality of electrolyzers 90 operate in parallel. The plurality of electrolyzers 90 operating in parallel refers to the plurality of electrolyzers 90 electrolyzing the electrolytic solution in parallel. An electrolyzer 90 is a tank in which the electrolytic solution is electrolyzed. The electrolytic apparatus 200 in the present example includes induction piping 92, induction piping 93, discharge piping 94, and discharge piping 95. The induction piping 92 and the induction piping 93 are connected to each of the plurality of electrolyzers 90. The discharge piping 94 and the discharge piping 95 are connected to each of the plurality of electrolyzers 90.

A liquid 70 and a liquid 72 are induced into each of the plurality of electrolyzers 90. A liquid 76 and a gas 78 (described later) are discharged from each of the plurality of electrolyzers 90. A liquid 74 and a gas 77 (described later) are discharged from each of the plurality of electrolyzers 90.

In the present example, the plurality of electrolyzers 90 are arrayed in a predetermined direction. In the present specification, the predetermined direction in which the plurality of electrolyzers 90 are arrayed is defined as the X axis direction. In the present specification, a direction orthogonal to the X axis direction and directed from the induction piping 92 toward the discharge piping 94 is defined as the Z axis. In the present specification, a direction orthogonal to the X axis and orthogonal to the Z axis direction is defined as the Y axis. The Z axis direction may be parallel to a vertical direction, and the XY plane may be a horizontal plane.

The electrolytic solution electrolyzed in the electrolyzer 90 is, for example, an NaCl (sodium chloride) aqueous solution or KCl (potassium chloride). In the present specification, a case where the electrolytic solution is an NaCl (sodium chloride) aqueous solution or a KCl (potassium chloride) aqueous solution is referred to as brine electrolysis. In a case of the brine electrolysis, the electrolyzer 90 produces $Cl_2$ (chlorine) by electrolyzing an NaCl (sodium chloride) aqueous solution or KCl (potassium chloride) in an anode chamber 79 (described later), and produces NaOH (sodium hydroxide) or a KOH (potassium hydroxide) aqueous solution and $H_2$ (hydrogen) by electrolyzing $H_2O$ (water) in a cathode chamber 98 (described later).

The electrolytic solution electrolyzed in the electrolyzer 90 may be an NaOH (sodium hydroxide) aqueous solution or a KOH (potassium hydroxide) aqueous solution. In the present specification, a case where the electrolytic solution is an NaOH (sodium hydroxide) aqueous solution or a KOH (potassium hydroxide) aqueous solution is referred to as alkaline water electrolysis. In a case of the alkaline water electrolysis, the electrolyzer 90 produces $O_2$ (oxygen) and $H_2$ (hydrogen) by electrolyzing an NaOH (sodium hydroxide) aqueous solution or a KOH (potassium hydroxide) aqueous solution.

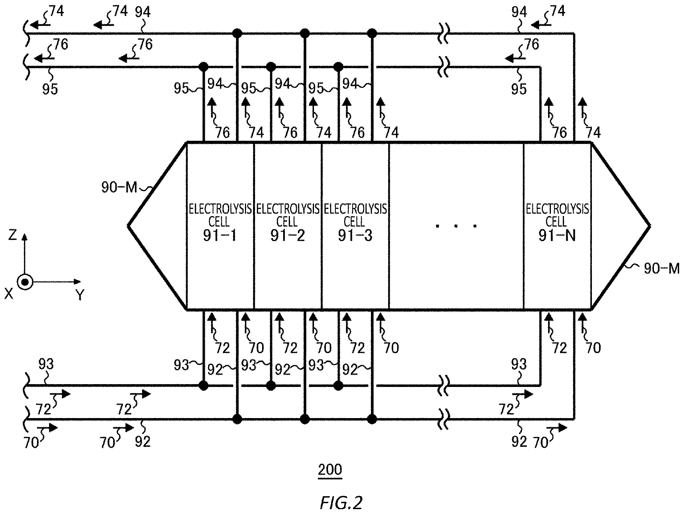

Fig. 2 is a view of the electrolytic apparatus 200 shown in Fig. 1 as viewed from the X axis direction. Description will be provided by taking the electrolyzer 91-M, which is one electrolyzer in Fig. 1, as an example. The one electrolyzer 90 may include a plurality of electrolysis cells 91. In the present example, the one electrolyzer 90 includes electrolysis cells 91-1 to 91-N (N is an integer equal to or greater than 2). N is, for example, 50. In the present example, each of the electrolyzers 90-1 to 90-M includes a plurality of electrolysis cells 91.

In the present example, the induction piping 92 and the induction piping 93 are connected to each of the electrolysis cells 91-1 to 91-N. The liquid 70 is induced into each of the electrolysis cells 91-1 to 91-N. The liquid 70 may be induced into each of the electrolysis cells 91-1 to 91-N after passing through the induction piping 92. The liquid 70 is an aqueous solution of an alkali metal chloride. An alkali metal is an element that belongs to Group 1 of the periodic table of the elements. In the case of the brine electrolysis, the liquid 70 is NaCl (sodium chloride) or a KCl (potassium chloride) aqueous solution. In the case of the alkaline water electrolysis, the liquid 70 is an NaOH (sodium hydroxide) aqueous solution or a KOH (potassium hydroxide) aqueous solution.

The liquid 72 is induced into each of the electrolysis cells 91-1 to 91-N. The liquid 72 may be induced into each of the electrolysis cells 91-1 to 91-N after passing through the induction piping 93. The liquid 72 is an aqueous solution of an alkali metal hydroxide. In the case of the brine electrolysis, the liquid 72 is an NaOH (sodium hydroxide) aqueous solution. In the case of the alkaline water electrolysis, the liquid 72 is an NaOH (sodium hydroxide) aqueous solution or a KOH (potassium hydroxide) aqueous solution.

In the present example, the discharge piping 94 and the discharge piping 95 are connected to each of the electrolysis cells 91-1 to 91-N. The liquid 76 and the gas 78 (described later) are discharged from each of the electrolysis cells 91-1 to 91-N. The liquid 76 and the gas 78 (described later) may be discharged out of the electrolytic apparatus 200 after passing through the discharge piping 95. The liquid 76 is an aqueous solution of the alkali metal hydroxide. If the liquid 72 is an NaOH (sodium hydroxide) aqueous solution, the liquid 76 is an NaOH (sodium hydroxide) aqueous solution. If the liquid 72 is a KOH (potassium hydroxide) aqueous solution, the liquid 76 is a KOH (potassium hydroxide) aqueous solution. The gas 78 (described later) may be $H_2$ (hydrogen).

The liquid 74 and the gas 77 (described later) are discharged from each of the electrolysis cells 91-1 to 91-N. The liquid 74 and the gas 77 (described later) may be discharged out of the electrolytic apparatus 200 after passing through the discharge piping 94. In the case of the brine electrolysis, the liquid 74 is an aqueous solution of the alkali metal chloride. If the liquid 70 is NaCl (sodium chloride) or a KCl (potassium chloride) aqueous solution, the liquid 74 is NaCl (sodium chloride) or a KCl (potassium chloride) aqueous solution. The gas 77 (described later) may be $Cl_2$ (chlorine).

In the case of the alkaline water electrolysis, if the liquid 70 is an NaOH (sodium hydroxide) aqueous solution, the liquid 74 is an NaOH (sodium hydroxide) aqueous solution. In a case of a water electrolysis, if the liquid 70 is a KOH (potassium hydroxide) aqueous solution, the liquid 74 is a KOH (potassium hydroxide) aqueous solution. In the case of the water electrolysis, the gas 77 (described later) may be $O_2$ (oxygen).

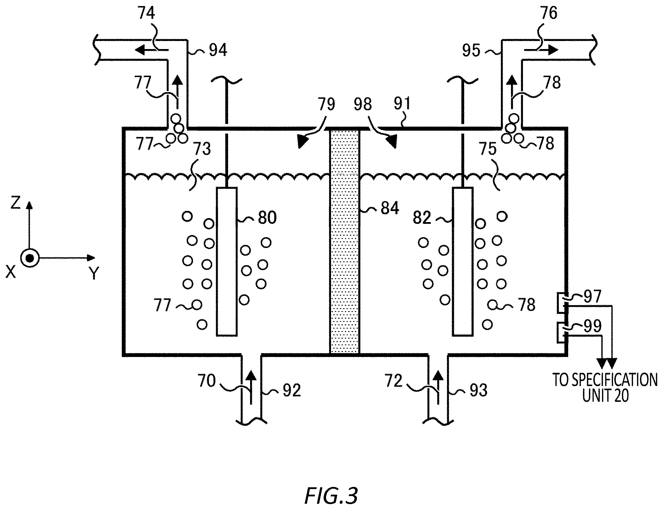

Fig. 3 is a diagram showing one example of details of one electrolysis cell 91 in Fig. 2. The electrolyzer 90 has an anode chamber 79, an anode 80, a cathode chamber 98, a cathode 82, and an ion exchange membrane 84. In the present example, the one electrolysis cell 91 has an anode chamber 79, an anode 80, a cathode chamber 98, a cathode 82, and an ion exchange membrane 84. The anode chamber 79 and the cathode chamber 98 are provided inside the electrolysis cell 91. The anode chamber 79 and the cathode chamber 98 are separated by the ion exchange membrane 84. The anode 80 is arranged in the anode chamber 79. The cathode 82 is arranged in the cathode chamber 98.

The induction piping 92 and the discharge piping 94 are connected to the anode chamber 79. The induction piping 93 and the discharge piping 95 are connected to the cathode chamber 98. The liquid 70 is induced into the anode chamber 79. The liquid 72 is induced into the cathode chamber 98.

The ion exchange membrane 84 is a membranous substance preventing passage of an ion having the same sign as that of an ion arranged in the ion exchange membrane 84 and allowing passage of an ion having an opposite sign. In the case of the brine electrolysis, the ion exchange membrane 84 is a membrane allowing passage of $Na^+$ (sodium ion) or $K^+$ (potassium ion) and preventing passage of $Cl^-$ (chloride ion). In the case of the alkaline water electrolysis, the ion exchange membrane 84 is a membrane allowing passage of $Na^+$ (sodium ion) or $K^+$ (potassium ion) and preventing passage of $OH^-$ (hydroxide ion).

The anode 80 and the cathode 82 may be respectively maintained at a predetermined positive potential and negative potential. The liquid 70 induced into the anode chamber 79 and the liquid 72 induced into the cathode chamber 98 are electrolyzed due to a potential difference between the anode 80 and the cathode 82. In each of the cases of the brine electrolysis and the alkaline water electrolysis, the anode 80 undergoes the following chemical reactions.

$$\text{(Chemical Formula 1-1) (brine electrolysis)} \qquad 2Cl^- \rightarrow Cl_2 + 2e^-$$

$$\text{(Chemical Formula 1-2) (alkaline water electrolysis)} \qquad 4OH^- \rightarrow O_2 + 2H_2O + 4e^-$$

If the liquid 70 is an NaCl (sodium chloride) aqueous solution, NaCl (sodium chloride) is ionized into $Na^+$ (sodium ion) and $Cl^-$ (chloride ion). In the anode 80, a $Cl_2$ (chlorine) gas is produced by the chemical reaction shown in Chemical Formula 1. The gas 77 (the $Cl_2$ (chlorine) gas) and the liquid 74 may be discharged from the anode chamber 79. $Na^+$ (sodium ion) moves from the anode chamber 79 to the cathode chamber 98 through the ion exchange membrane 84 due to an attractive force from the cathode 82.

If the liquid 70 is a KCl (potassium chloride) aqueous solution, KCl (potassium chloride) is ionized into $K^+$ (potassium ion) and $Cl^-$ (chloride ion). In the anode 80, a $Cl_2$ (chlorine) gas is produced by the chemical reaction shown in Chemical Formula 1. The gas 77 (the $Cl_2$ (chlorine) gas) and the liquid 74 may be discharged from the anode chamber 79. $K^+$ (potassium ion) moves from the anode chamber 79 to the cathode chamber 98 through the ion exchange membrane 84 due to an attractive force from the cathode 82.

If the liquid 70 is an NaOH (sodium hydroxide) aqueous solution, NaOH (sodium hydroxide) is ionized into $Na^+$ (sodium ion) and $OH^-$ (hydroxide ion). In the anode 80, $H_2O$ (water) and an $O_2$ (oxygen) gas are produced by the chemical reaction shown in Chemical Formula 1-2. The gas 77 (the $O_2$ (oxygen) gas) and the liquid 74 may be discharged from the anode chamber 79. $Na^+$ (sodium ion) moves from the anode chamber 79 to the cathode chamber 98 through the ion exchange membrane 84 due to an attractive force from the cathode 82.

A liquid 73 may be retained in the anode chamber 79. In the case of the brine electrolysis, the liquid 73 is an aqueous solution of the alkali metal chloride. In the present example, the liquid 73 is an NaCl (sodium chloride) aqueous solution. An $Na^+$ (sodium ion) concentration and a $Cl^-$ (chloride ion) concentration in the liquid 73 may be respectively lower than an $Na^+$ (sodium ion) concentration and a $Cl^-$ (chloride ion) concentration in the liquid 70. The liquid 73 may be a KCl (potassium chloride) aqueous solution. A $K^+$ (potassium ion) concentration and a $Cl^-$ (chloride ion) concentration in the liquid 73 may be respectively lower than a $K^+$ (potassium ion) concentration and a $Cl^-$ (chloride ion) concentration in the liquid 70. In the case of the alkaline water electrolysis, the liquid 73 is an NaOH (sodium hydroxide) aqueous solution or a KOH (potassium hydroxide) aqueous solution.

A concentration sensor 99 may be provided in the cathode chamber 98. The concentration sensor 99 measures a concentration of an alkali metal chloride in the liquid 75.

The electrolyzer 90 may be provided with a temperature sensor 97 which measures a temperature of the electrolytic solution decomposed by the electrolyzer 90. In the present example, the temperature sensor 97 is provided in the cathode chamber 98.

The cathode 82 undergoes the following chemical reaction.

$$\text{(Chemical Formula 2)} \qquad 2H_2O + 2e^- \rightarrow H_2 + 2OH^-$$

If the liquid 72 is an NaOH (sodium hydroxide) aqueous solution, NaOH (sodium hydroxide) is ionized into $Na^+$ (sodium ion) and $OH^-$ (hydroxide ion). If the liquid 72 is KOH (potassium hydroxide), KOH (potassium hydroxide) is ionized into $K^+$ (potassium ion) and $OH^-$ (hydroxide ion). In the cathode 82, an $H_2$ (hydrogen) gas and $OH^-$ (hydroxide ion) are produced by the chemical reaction shown in Chemical Formula 2. The gas 78 (the $H_2$ (hydrogen) gas) and the liquid 76 may be discharged from the cathode chamber 98.

A liquid 75 may be retained in the cathode chamber 98. The liquid 75 is an aqueous solution of the alkali metal hydroxide. In the present example, the liquid 75 is an NaOH (sodium hydroxide) aqueous solution or a KOH (potassium hydroxide) aqueous solution. In the present example, the cathode chamber 98 retains the liquid 75 in which $OH^-$ (hydroxide ion) produced by the chemical reaction shown in Chemical Formula 2 and $Na^+$ (sodium ion) or $K^+$ (potassium ion) moved from the anode chamber 79 are dissolved.

A product produced by the plurality of electrolyzers 90 is referred to as a product P. If the liquid 70 is an NaCl (sodium chloride) aqueous solution and the liquid 72 is an NaOH (sodium hydroxide) aqueous solution (in the case of the brine electrolysis), the product P is NaOH (sodium hydroxide) or $Cl_2$ (chlorine). If the liquid 70 is a KCl (potassium chloride) aqueous solution and the liquid 72 is a KOH (potassium hydroxide) aqueous solution, the product P is KOH (potassium hydroxide) or $Cl_2$ (chlorine). If the liquid 70 and the liquid 72 are NaOH (sodium hydroxide) aqueous solutions (in the case of the alkaline water electrolysis), the product P is $H_2$ (hydrogen).

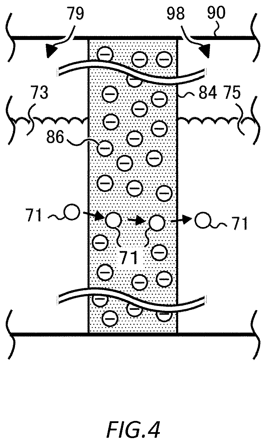

Fig. 4 is an enlarged view of a vicinity of the ion exchange membrane 84 in the electrolysis cell 91 shown in Fig. 3. Anion groups 86 are fixed to the ion exchange membrane 84 in the present example. Since an anion is repelled by the anion groups 86, it is difficult for the anion to pass through the ion exchange membrane 84. In the present example, the anion is Cl⁻ (chloride ion). Since a cation 71 is not repelled by the anion groups 86, it can pass through the ion exchange membrane 84. If the liquid 70 (see Fig. 3) is an NaCl (sodium chloride) aqueous solution, the cation 71 is Na⁺ (sodium ion). If the liquid 70 is a KCl (potassium chloride) aqueous solution, the cation 71 is K⁺ (potassium ion).

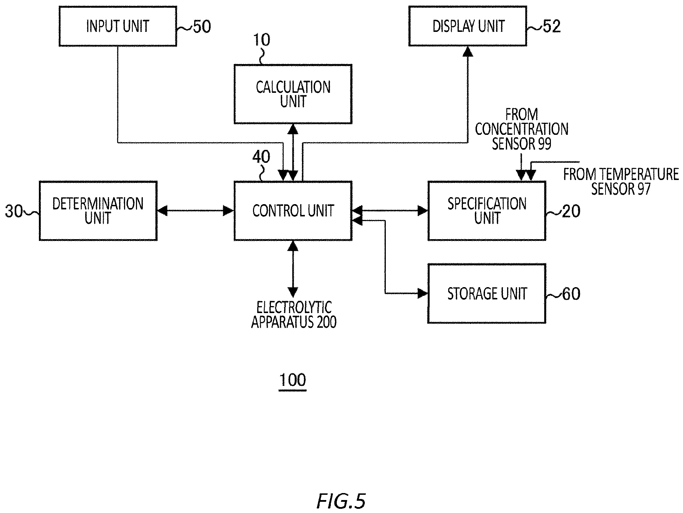

Fig. 5 is a diagram showing one example of a block diagram of an operation support apparatus 100 according to one embodiment of the present invention. The operation support apparatus 100 supports operation of an electrolytic apparatus 200 (see Fig. 2). The operation support apparatus 100 includes a calculation unit 10, a specification unit 20, a determination unit 30, and a control unit 40. The operation support apparatus 100 may include an input unit 50, a display unit 52, and a storage unit 60.

The operation support apparatus 100 is, as one example, a computer including a CPU, a memory, an interface, and the like. The control unit 40 may be the CPU. The calculation unit 10, the specification unit 20, the determination unit 30, and the control unit 40 may make one CPU that is the CPU. If the operation support apparatus 100 is a computer, the computer may have an operation support program installed therein that causes an operation support method described later to be executed, or may have an operation support program installed therein that causes the computer to function as the operation support apparatus 100.

The input unit 50 is, for example, a keyboard, a mouse, or the like. The display unit 52 is, for example, a display, a monitor, or the like.

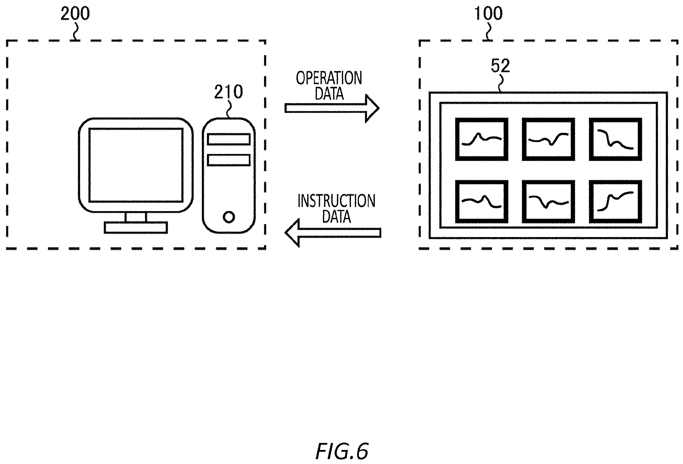

Fig. 6 is a conceptual diagram showing one example of support for operation of electrolyzers 90 by an operation support apparatus 100. In the present example, an electrolytic apparatus 200 (see Fig. 1) has a terminal 210. The terminal 210 is, for example, a distributed control system (DCS). The terminal 210 and the operation support apparatus 100 may communicate with each other wirelessly or by wire. The terminal 210 transmits operation data related to operation of the electrolytic apparatus 200 to the operation support apparatus 100. The operation support apparatus 100 transmits, to the terminal 210, instruction data such as a value of current to be applied to the electrolyzers 90. A display unit 52 displays states of parameters related to control of the electrolytic apparatus 200. The parameters are, for example, a current efficiency CE (described later), a voltage CV (described later), and the like.

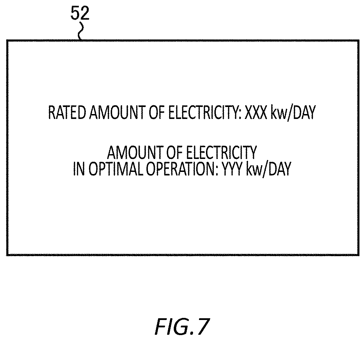

Fig. 7 is a diagram showing one example of a mode of display by a display unit 52. In Fig. 7, the display unit 52 displays a rated amount of electricity and an amount of electricity in optimal operation. The display unit 52 may further display an amount of power consumption Ec (described later) for each time T.

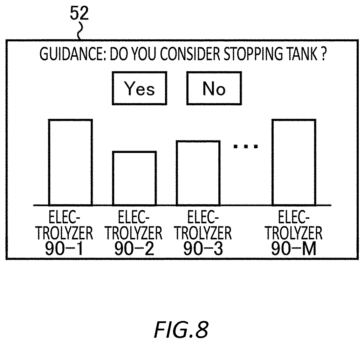

Fig. 8 is a diagram showing another example of a mode of display by a display unit 52. In Fig. 8, the display unit 52 displays an operation state of each electrolyzer 90. The display unit 52 displays guidance regarding a tank stop for a user of an operation support apparatus 100. The guidance regarding the tank stop is guidance regarding a stop of operation of the electrolyzers 90.

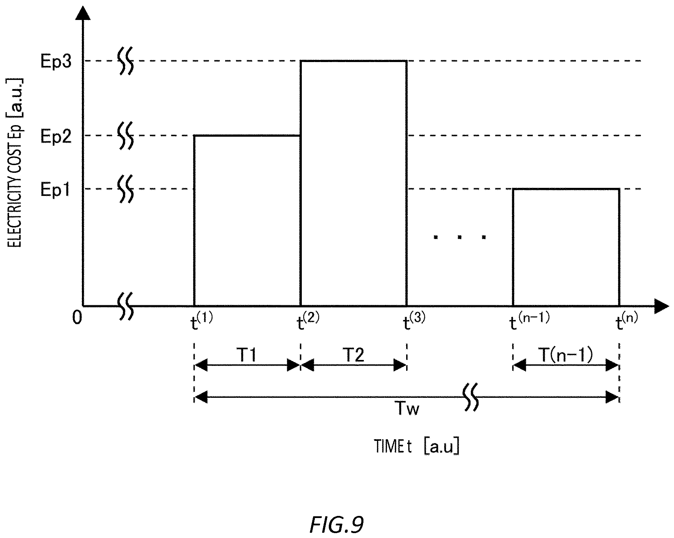

Fig. 9 is a diagram showing one example of a relationship between an electricity cost associated with operation of a plurality of electrolyzers 90 operating in parallel and a time t at which the plurality of electrolyzers 90 operate. The electricity cost is referred to as an electricity cost Ep. A period of time between one time t at which the plurality of electrolyzers 90 operate and another time t', at which the plurality of electrolyzers 90 operate, after the one time t is referred to as a time T. A period of time for the time T may be predetermined. In the example shown in Fig. 9, a period of time from a time $t^{(1)}$ to a time $t^{(2)}$ is referred to as a time T1, a period of time from the time $t^{(2)}$ to a time $t^{(3)}$ is referred to as a time T2, and a period of time from a time $t^{(n-1)}$ to a time $t^{(n)}$ is referred to as a time T(n-1).

The electricity cost Ep may be expressed as an amount of money, may be expressed as an amount of power consumption consumed with the operation of the plurality of electrolyzers 90 operating in parallel, or may be expressed as another unit of amount. The amount of power consumption is referred to as an amount of power consumption Ec. The electricity cost Ep may be a value obtained by converting a sum of a plurality of types of costs into the amount of money. If the electricity cost Ep is expressed as the amount of power consumption Ec, Fig. 9 shows one example of a relationship between the amount of power consumption Ec and the time t at which the plurality of electrolyzers 90 operate.

The electricity cost Ep may differ from time T to time T. In the example shown in Fig. 9, the electricity cost Ep during the time T1 is referred to as an electricity cost Ep2, the electricity cost Ep during the time T2 is referred to as an electricity cost Ep3, and the electricity cost Ep during a time T3 is referred to as an electricity cost Ep1. In the present example, the electricity cost Ep1 is smaller than the electricity cost Ep2, and the electricity cost Ep2 is smaller than the electricity cost Ep3. The time T1 is, for example, an early morning time. The time T2 is, for example, a day time. The time T3 is, for example, a night time. The electricity cost Ep for each time T may be inputted by an input unit 50.

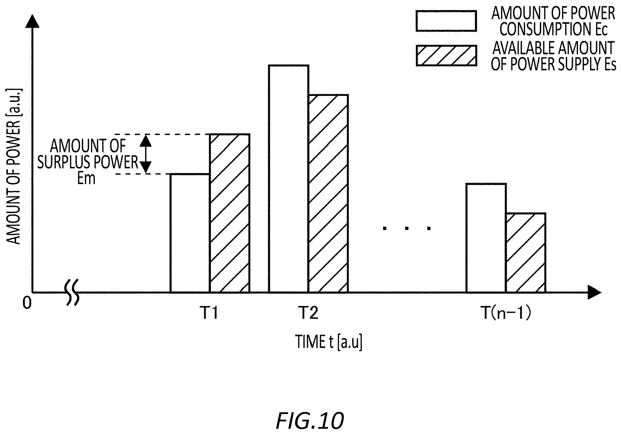

Fig. 10 is a diagram showing one example of an amount of power consumption Ec and an available amount of power supply Es for each time T. The available amount of power supply Es may refer to a maximum amount of power that can be supplied to a plurality of electrolyzers 90 during one time T. If an electrolytic apparatus 200 is included in a plant, the available amount of power supply Es may be a maximum amount of power that can be distributed to the electrolytic apparatus 200 for a case where the plant supplies power to a plurality of apparatuses including the electrolytic apparatus 200.

A determination unit 30 may determine, for each time T, a magnitude relation between the amount of power consumption Ec and the available amount of power supply Es. In the example shown in Fig. 10, the determination unit 30 determines that the amount of power consumption Ec is smaller than the available amount of power supply Es during a time T1, and determines that the amount of power consumption Ec exceeds the available amount of power supply Es during a time T1 and a time T(n-1). A specification unit 20 may specify the one time T during which the amount of power consumption Ec is smaller than the available amount of power supply Es and another time T during which the amount of power consumption Ec is equal to or greater than the available amount of power supply Es. In the example shown in Fig. 10, the specification unit 20 specifies the time T1 as the one time T, and specifies at least one of the time T2 or the time T(n-1) as the another time T.

A calculation unit 10 may calculate, during the one time T, an amount of surplus power that is a difference between the available amount of power supply Es and the amount of power consumption Ec. The amount of surplus power is referred to as an amount of surplus power Em. In the example shown in Fig. 10, the calculation unit 10 calculates the amount of surplus power Em during the time T1. A control unit 40 may control power supplied to the electrolyzers 90 to be power including the amount of surplus power Em, during the another time T for which it is determined that the amount of power consumption Ec is equal to or greater than the available amount of power supply Es. The power including the amount of surplus power Em may be an amount of power obtained by adding the amount of surplus power Em to the available amount of power supply Es.

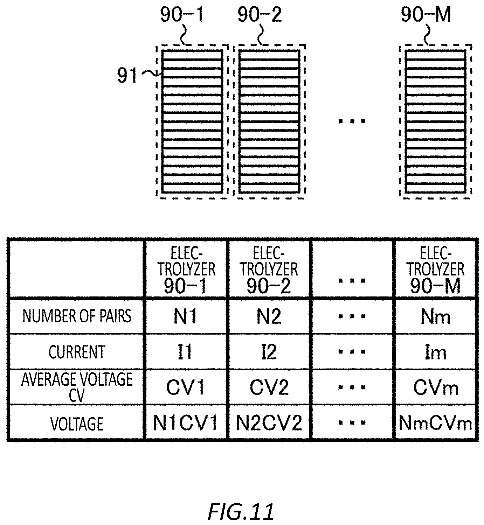

Fig. 11 is a diagram illustrating currents and the like in a plurality of electrolyzers 90 in calculation by a calculation unit 10 (see Fig. 5) of an amount of production of a product P. It is assumed that the numbers of pairs in an electrolysis cell 91 (see Fig. 2) in each of electrolyzers 90-1 to 90-M are respectively N1 to Nm. The number of pairs is the number of pairs of anode chambers 79 and cathode chambers 98 in one electrolysis cell 91. The number of pairs in one electrolysis cell 91 is equal to the number of ion exchange membranes 84 (see Fig. 3) in the one electrolysis cell 91.

It is assumed that currents flowing through the electrolyzers 90-1 to 90-M are respectively referred to as currents I1 to Im. It is assumed that voltages in the electrolyzers 90-1 to 90-M are respectively referred to as voltages CV1 to CVm. As shown in Fig. 11, voltages in the electrolyzers 90-1 to 90-M are respectively referred to as N1CV1 to NmCVm.

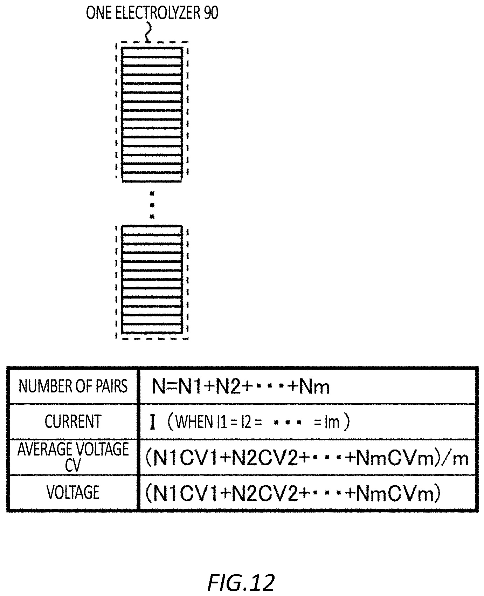

Fig. 12 is a diagram illustrating currents and the like in a plurality of electrolyzers 90 for a case where the plurality of electrolyzers 90 are integrated into one electrolyzer 90 in calculation by a calculation unit 10 (see Fig. 5) of an amount of production of a product P. The plurality of electrolyzers 90 being integrated into one electrolyzer refers to the plurality of electrolyzers 90 being considered as one electrolyzer 90. In the present example, the calculation unit 10 integrates electrolyzers 90-1 to 90-M into one electrolyzer 90 in the calculation of the amount of production of the product P. The number of pairs N in the one electrolyzer 90 is expressed by Equation 1 described below.

$$\mathrm{N} = N1 + N2 + \cdots + Nm \qquad (1)$$

That is, the number of pairs N is a sum of the numbers of pairs N1 to Nm.

A current flowing through the electrolyzers 90 integrated into one electrolyzer 90 is represented as I. If it is assumed that an equal current I flows through the electrolyzers 90-1 to 90-M, an average voltage CV in the electrolyzers 90 integrated into one electrolyzer 90 is expressed by Equation 2 described below.

$$\mathrm{CV} = \left( N1CV1 + N2CV2 + \cdots + NmCVm \right) \Big/ N \qquad (2)$$

That is, the average voltage CV is expressed as a weighted average by the number of pairs N.

A target amount of production of the product P is referred to as a target amount of production At. The target amount of production At is a target amount of production of the product P produced by the plurality of electrolyzers 90 over a predetermined period of time. The predetermined period of time is referred to as a period of time Tw. In the example shown in Fig. 9, the period of time Tw is a total of the times T1 to T(n-1). If the times t1 and $t^{(n)}$ are the same time, the period of time Tw is 24 hours. The target amount of production At may be inputted by an input unit 50.

The calculation unit 10 (see Fig. 5) calculates the amount of production of the product P for each time T that satisfies the target amount of production At, based on an electricity cost Ep or an amount of power consumption Ec for each predetermined time T. The amount of production calculated by the calculation unit 10 is referred to as an amount of production Ac. In the present example, the calculation unit 10 calculates the amount of production Ac for the electrolyzers 90 integrated into one electrolyzer 90 in Fig. 11. In the present example, the calculation unit 10 also calculates a first value of current Iv1 to a fourth value of current Iv4, which will be described later, for the electrolyzers 90 integrated into one electrolyzer 90 in Fig. 11.

A specification unit 20 (see Fig. 5) specifies an electrolyzer 90 to be operated among the plurality of electrolyzers 90, based on the amount of production Ac calculated by the calculation unit 10. A control unit 40 controls a current flowing through the electrolyzer 90 to be operated that has been specified by the specification unit 20.

The specification unit 20 (see Fig. 5) may specify an electrolyzer 90 to be stopped among the plurality of electrolyzers 90. The control unit 40 may control a current flowing through the electrolyzer 90 to be stopped, to be smaller than a current flowing through an electrolyzer 90 not to be stopped. The control unit 40 may control the current flowing through the electrolyzer 90 to be stopped, to zero.

The calculation unit 10 (see Fig. 5) may calculate, for each time T, a first value of current to be applied to the plurality of electrolyzers 90, based on the amount of production Ac. The first value of current is referred to as the first value of current Iv1. The calculation unit 10 may calculate the first value of current Iv1 to be applied to the electrolyzer 90 not to be stopped, for a case where the current to be passed through the electrolyzer 90 to be stopped is set to zero.

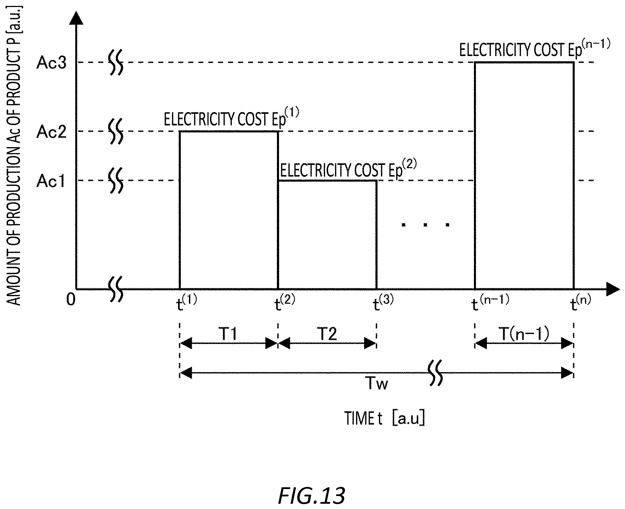

Fig. 13 is a diagram showing one example of a relationship between an amount of production Ac of a product P associated with operation of a plurality of electrolyzers 90 operating in parallel and a time T during which the plurality of electrolyzers 90 operate. The amount of production Ac may differ from time T to time T. In the example shown in Fig. 13, the amount of production Ac during a time T1 is referred to as an amount of production Ac2, the amount of production Ac during a time T2 is referred to as an amount of production Ac1, and the amount of production Ac during a time T(n-1) is referred to as an amount of production Ac3. In the present example, the amount of production Ac1 is smaller than the amount of production Ac2, and the amount of production Ac2 is smaller than the amount of production Ac3. In the example shown in Fig. 13, an electricity cost Ep during the time T1 is referred to as an electricity cost $Ep^{(1)}$, an electricity cost Ep during the time T2 is referred to as an electricity cost $Ep^{(2)}$, and an electricity cost Ep during the time T(n-1) is referred to as an electricity cost $Ep^{(n-1)}$.

An current efficiency of an electrolyzer 90 is referred to as a current efficiency CE. The current efficiency CE refers to a ratio of an actual amount of production of the product P to a theoretical amount of production thereof. A sum of the amounts of production Ac of the product P over a period of time Tw is referred to as a total amount of production Acs. The total amount of production Acs is expressed by Equation 3 described below.

$$\mathrm{Acs} = \sum_{j=1}^{k-1} (1.492/1000) \times I^{(j)} \times CE \times N \times t^{(j)} \tag{3}$$

A sum of the electricity costs Ep over the period of time Tw is referred to as a total electricity cost Eps. The total electricity cost Eps is expressed by Equation 4 described below.

$$\mathrm{Eps} = \sum_{j=1}^{k-1} I^{(j)} \times CV^{(j)} \times N \times t^{(j)} \times Ep^{(j)} \tag{4}$$

A voltage $CV^{(j)}$ in Equation 4 is expressed by Equation 5 described below.

$$CV^{(j)} = a \times I^{(j)} + E_0 \tag{5-1}$$

$$a = \frac{\left\{ CV_A - E_0 - K_f\left(T^{(j)} - T_A\right) \right\}}{I_A} \tag{5-2}$$

From Equations 3 to 5, a value of current $I^{(j)}$ is expressed by Equation 6 described below.

$$I^{(j)} = \frac{CE}{2a \times Ep^{(j)}} \times B - \frac{E_0}{2a} \tag{6-1}$$

$$B = \frac{2a \times C + (1.492/1000) \times 24 \times CE \times N \times E_0}{\sum_{j'}(1.492/1000) \times CE^2 \times N \times \frac{t^{(j')}}{Ep^{(j')}}} \tag{6-2}$$

A calculation unit 10 (see Fig. 5) may calculate a first value of current Iv1 based on Equation 6 described above.

The calculation unit 10 (see Fig. 5) may calculate the amount of production Ac that satisfies a target amount of production At of the product P over the period of time Tw and minimizes the electricity cost Ep or an amount of power consumption Ec over the period of time Tw. The calculation unit 10 may calculate, based on Equations 3 to 6, the amount of production Ac that minimizes the total electricity cost Eps in Equation 4 by setting the total amount of production Acs in Equation 3 as the target amount of production At. A specification unit 20 (see Fig. 5) may specify an electrolyzer 90 to be operated among the plurality of electrolyzers 90, based on the amount of production Ac that minimizes the electricity cost Ep.

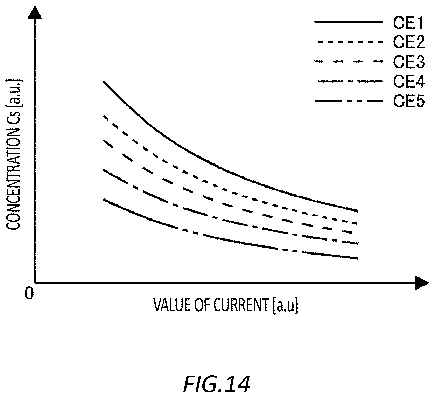

Fig. 14 is a diagram showing, for a plurality of current efficiencies CE, a relationship between a concentration of an alkali metal chloride in a liquid 75 (see Fig. 3) and a second value of current to be applied to electrolyzers 90. The second value of current is referred to as a second value of current Iv2. An impurity concentration that is an indicator of a quality of a product P is referred to as a concentration Cs. If the product P is NaOH (sodium hydroxide), the concentration Cs may refer to NaCl (sodium chloride), an $NaClO_3$ (sodium chlorate) concentration, or an HClO (hypochlorous acid) concentration in the product P. If the product P is $Cl_2$ (chlorine), the concentration Cs may refer to an $O_2$ (oxygen) concentration in the product P. If the product P is KOH (potassium hydroxide), the concentration Cs may refer to a KCl (potassium chloride) concentration, a $KClO_3$ (potassium chlorate) concentration, or a KClO (potassium hypochlorite) concentration in the product P. In the present example, the concentration Cs is a concentration of an alkali metal chloride in an aqueous solution of the product P (liquid 75). The concentration Cs may be measured by a concentration sensor 99 (see Fig. 4). A specification unit 20 (see Fig. 5) may acquire the concentration Cs measured by the concentration sensor 99.

In a case of an alkaline water electrolysis, a flow rate of the product P ($H_2$ (hydrogen)) is represented as FL. FL is a flow rate of a gas 78. The flow rate FL may be measured by a flow rate sensor. A theoretical amount of generation of the gas 78 based on a current I is represented as Am. A theoretical amount of loss of the product P ($H_2$ (hydrogen)) based on a concentration (concentration Cs) of $H_2$ (hydrogen) in a gas 77 ($O_2$ (oxygen)) is represented as Ls. A current efficiency CE in the case of the alkaline water electrolysis is expressed by Equation 7-1 or Equation 7-2 described below.

$$CE = FL/Am \tag{7-1}$$

$$CE = \frac{(Am - Ls)}{Am} \tag{7-2}$$

The relationship between the concentration Cs and the value of current shown in Fig. 14 may be acquired by measuring a change in the concentration Cs for a case where the value of current is changed. The greater the value of current is, the smaller the concentration Cs tends to be. In Fig. 14, among current efficiencies CE1 to CE5, a maximum current efficiency CE is an current efficiency CE1 and a minimum current efficiency CE is a current efficiency CE5. The smaller the current efficiency CE is, the smaller the concentration Cs tends to be.

In Fig. 14, the second value of current Iv2 is a value of current for satisfying a predetermined quality of the product P. The second value of current Iv2 may be a minimum value of current for satisfying the quality. A relationship between the concentration Cs and the second value of current Iv2 shown in Fig. 14 may be acquired in advance. The relationship between the concentration Cs and the second value of current Iv2 acquired in advance may be stored in a storage unit 60.

A calculation unit 10 (see Fig. 5) may calculate the second value of current Iv2 to be applied to a plurality of electrolyzers 90, based on the concentration Cs. The calculation unit 10 may calculate the second value of current Iv2 by fitting the relationship between the concentration Cs and the second value of current Iv2 shown in Fig. 14 to Equation 8 described below.

$$Iv2 = \left( \frac{Cs}{-\beta \times CE + \beta} \right)^{-1/\gamma} \times F \qquad (8)$$

In Equation 8, F is a constant. F is, for example, 10.8.

At least one of a first value of current Iv1 or the second value of current Iv2 may be decided based on a temperature of an electrolytic solution. The temperature of the electrolytic solution may be measured by a temperature sensor 97 (see Fig. 3). Performance of an electrolyzer 90 may change depending on the temperature of the electrolytic solution and on at least one of the first value of current Iv1 or the second value of current Iv2. Therefore, at least one of the first value of current Iv1 or the second value of current Iv2 may be decided based on the temperature of the electrolytic solution.

A determination unit 30 (see Fig. 5) may determine a magnitude relation between the second value of current Iv2 and the first value of current Iv1 for each time T calculated by the calculation unit 10 (see Fig. 5). The determination unit 30 may determine a magnitude relation between the first value of current Iv1 for each time T and a predetermined fourth value of current to be applied to the plurality of electrolyzers 90. The fourth value of current is referred to as a fourth value of current Iv4. The fourth value of current Iv4 may be a maximum value of current that may be passed through the plurality of electrolyzers 90. The maximum value of current is, for example, 16.2 kA.

At least one time T of times T1 to T(n-1) (see Fig. 9 and Fig. 13) is referred to as a first time Ta1, and the at least one time T different from the first time Ta1 is referred to as a second time Ta2. If the determination unit 30 (see Fig. 5) determines that the first value of current Iv1 is equal to or smaller than the fourth value of current Iv4 and determines that the first value of current Iv1 is smaller than the second value of current Iv2 during the first time Ta1, the specification unit 20 (see Fig. 5) may specify one electrolyzer 90 to be stopped among the plurality of electrolyzers 90. The one electrolyzer 90 may be, among the plurality of electrolyzers 90, any one electrolyzer 90, or any two or more electrolyzers 90. In the present example, a case where the determination unit 30 determines that the first value of current Iv1 is equal to or smaller than the fourth value of current Iv4 may refer to a case where the determination unit 30 determines that the first value of current Iv1 is equal to or smaller than the fourth value of current Iv4 during all of the times T1 to T(n-1).

If the determination unit 30 (see Fig. 5) determines that the first value of current Iv1 is equal to or greater than the second value of current Iv2 and determines that the first value of current Iv1 is greater than the fourth value of current Iv4 during the second time Ta2, the specification unit 20 (see Fig. 5) may specify one electrolyzer 90 to be stopped among the plurality of electrolyzers 90. In the present example, a case where the determination unit 30 determines that the first value of current Iv1 is equal to or greater than the second value of current Iv2 may refer to a case where the determination unit 30 determines that the first value of current Iv1 is equal to or greater than the second value of current Iv2 during all of the times T1 to T(n-1).

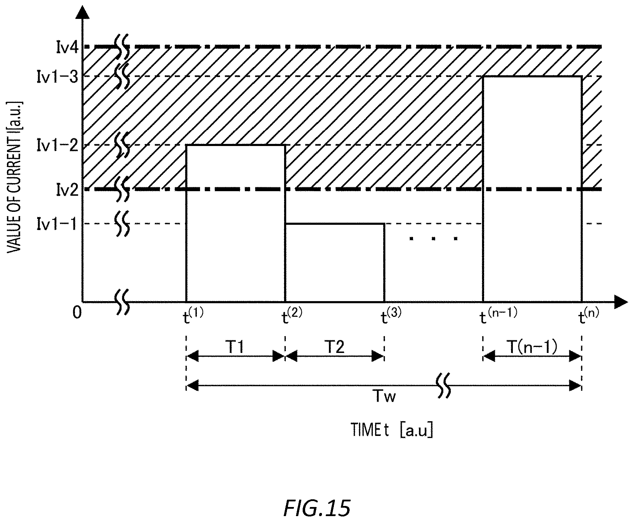

Fig. 15 is a diagram showing one example of a first value of current Iv1 for each time T calculated by a calculation unit 10 (see Fig. 5). In the present example, the first value of current Iv1 during a time T1 is referred to as a first value of current Iv1-1, the first value of current Iv1 during a time T2 is referred to as a first value of current Iv1-2, and the first value of current Iv1 during a time T(n-1) is referred to as a first value of current Iv1-3. Fig. 15 also shows a second value of current Iv2 and a fourth value of current Iv4 mentioned above. In Fig. 15, a range from the second value of current Iv2 to the fourth value of current Iv4 is hatched.

In the present example, the first value of current Iv1-2 and the first value of current Iv1-3 are equal to or greater than the second value of current Iv2 and are equal to or smaller than the fourth value of current Iv4, and the first value of current Iv1-1 is smaller than the second value of current Iv2. A specification unit 20 (see Fig. 5) may specify a time T during which an amount of production Ac is the smallest. In the example shown in Fig. 13, the specification unit 20 specifies the time T2 as the time T during which the amount of production Ac is the smallest. In the present example, a first time Ta1 is the time T2. In the present example, the specification unit 20 (see Fig. 5) specifies one electrolyzer 90 to be stopped among a plurality of electrolyzers 90 during the time T2.

If the determination unit 30 (see Fig. 5) determines that the first value of current Iv1 is equal to or greater than the second value of current Iv2 and is equal to or smaller than the fourth value of current Iv4, a control unit 40 (see Fig. 5) may control currents flowing through the plurality of electrolyzers 90 to the first value of current Iv1.

The determination unit 30 (see Fig. 5) may acquire a time elapsed since it was determined that the first value of current Iv1 is equal to or greater than the second value of current Iv2 and is equal to or smaller than the fourth value of current. The time elapsed is referred to as a time elapsed Ts. The determination unit 30 may determine a magnitude relation between the time elapsed Ts and a predetermined time. The predetermined time is referred to as a time Tp. The time Tp may be a period of time from when judgement is made as to whether operation conditions of an electrolyzer 90 are to be changed to when the next judgement is made as to whether the operation conditions of the electrolyzer 90 are to be changed. The time Tp may be the time Tw shown in Fig. 13 and Fig. 15.

The operation conditions of the electrolyzer 90 are referred to as operation conditions Cd. The operation conditions Cd may include at least one of a current efficiency CE, a voltage CV, an electricity cost Ep, a target amount of production At, or a length of each time of times T1 to T(n-1).

If the determination unit 30 (see Fig. 5) determines that the time elapsed Ts is longer than the time Tp, the control unit 40 (see Fig. 5) may output information related to whether the operation conditions Cd are to be changed. The control unit 40 outputting the information may refer to the control unit 40 causing a display unit 52 (see Fig. 5) to display the information.

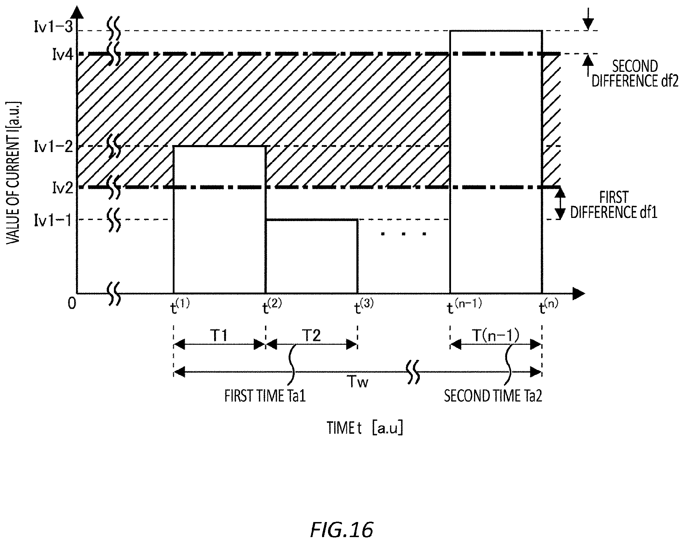

Fig. 16 is a diagram showing another example of a first value of current Iv1 for each time T calculated by a calculation unit 10 (see Fig. 5). In the present example, a first value of current Iv1-3 is greater than a fourth value of current Iv4. The present example is different from the example shown in Fig. 15 in this respect. In the present example, a second time Ta2 is a time T(n-1).

If a determination unit 30 (see Fig. 5) determines that the first value of current Iv1 is smaller than a second value of current Iv2 during a first time Ta1 and determines that the first value of current Iv1 is greater than the fourth value of current Iv4 during the second time Ta2, the calculation unit 10 (see Fig. 5) may further calculate, for each time T, a value of current to be applied to a plurality of electrolyzers 90 by setting currents flowing through the plurality of electrolyzers 90 during the first time Ta1 to the second value of current Iv2 or by setting currents flowing through the plurality of electrolyzers 90 during the second time Ta2 to the fourth value of current Iv4.

A difference between the second value of current Iv2 and the first value of current Iv1 during the first time Ta1 is referred to as a first difference df1. The first difference df1 is Iv2 - Iv1. A difference between the first value of current Iv1 and the fourth value of current Iv4 during the second time Ta is referred to as a second difference df2. The second difference df2 is Iv1 - Iv4.

The determination unit 30 (see Fig. 5) may determine a magnitude relation between the first difference df1 during the first time Ta1 and the second difference df2 during the second time Ta2. If the determination unit 30 determines that the first difference df1 is greater than the second difference df2, the calculation unit 10 (see Fig. 5) may further calculate, for each time T, the value of current by setting the currents flowing through the plurality of electrolyzers 90 during the first time Ta1 to the second value of current Iv2. If the determination unit 30 determines that the second difference df2 is greater than the first difference df1, the calculation unit 10 may further calculate, for each time T, the value of current by setting the currents flowing through the plurality of electrolyzers 90 during the second time Ta2 to the fourth value of current Iv4. In the present example, the second difference df2 is greater than the first difference df1. Therefore, the calculation unit 10 further calculates, for each time T, the value of current by setting the currents flowing through the plurality of electrolyzers 90 during the second time Ta2 to the fourth value of current Iv4.

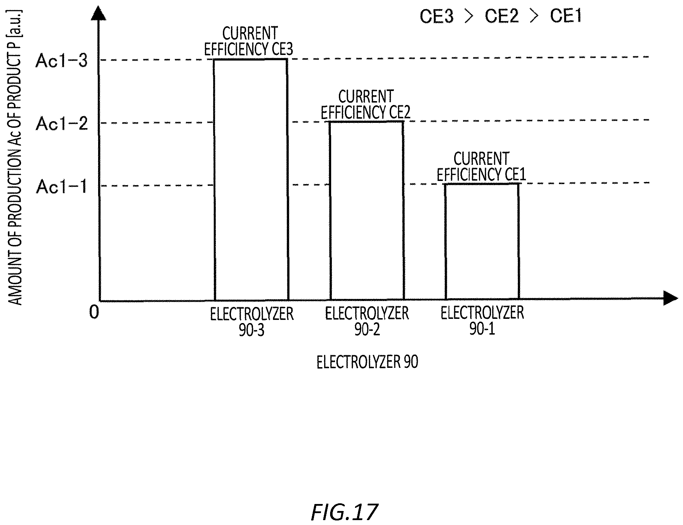

Fig. 17 is a diagram showing one example of an amount of production Ac of a product P produced by each of a plurality of electrolyzers 90 during a time T2 (see Fig. 13). Description will be provided by taking a case where the number of the plurality of electrolyzers 90 shown in Fig. 1 is three (a case where M = 3) as an example.

In the present example, it is assumed that current efficiencies CE of electrolyzers 90-1 to 90-3 are respectively current efficiencies CE1 to CE3. It is assumed that the current efficiency CE3 is greater than the current efficiency CE2, and the current efficiency CE2 is greater than the current efficiency CE1. In the present example, it is assumed that the amount of production Ac by the electrolyzers 90-1 to 90-3 are respectively amounts of production Ac1-1 to Ac1-3. It is assumed that the amount of production Ac1-3 is greater than the amount of production Ac1-2, and the amount of production Ac1-2 is greater than the amount of production Ac1-1.

A specification unit 20 may specify an electrolyzer 90 with the smallest amount of production Ac as one electrolyzer 90 to be stopped. In the present example, the specification unit 20 specifies the electrolyzer 90-1 as an electrolyzer 90 to be stopped. The specification unit 20 may specify one or more electrolyzers 90 of the plurality of electrolyzers 90 as one electrolyzer 90 to be stopped. The specification unit 20 may specify the electrolyzer 90 to be stopped in ascending order of an acquired amount of production.

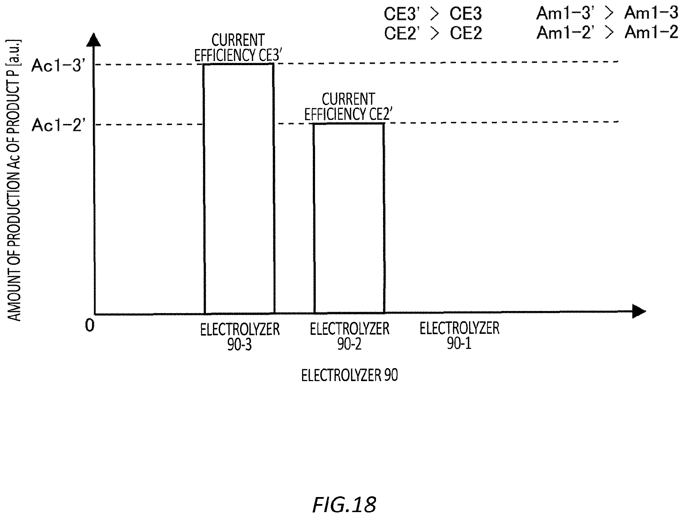

Fig. 18 is a diagram showing one example of an amount of production Ac for a case where operation of an electrolyzer 90-1 has been stopped in the example shown in Fig. 17. In the present example, it is assumed that current efficiencies CE of an electrolyzer 90-2 and an electrolyzer 90-3 are respectively current efficiency CE2' and current efficiency CE3'. In the present example, it is assumed that amounts of production Ac by the electrolyzer 90-1 and the electrolyzer 90-2 are respectively an amount of production Ac1-2' and an amount of production Ac1-3'.

A calculation unit 10 (see Fig. 5) may further calculate, for each time T, a value of current for a case where one electrolyzer 90 specified by a specification unit 20 (see Fig. 5) has been stopped. The value of current is referred to as a third value of current Iv3. In the present example, the calculation unit 10 further calculates, for each time T, a value of current for a case where operation of the electrolyzer 90-1 has been stopped.

The third value of current Iv3 may be greater than a first value of current Iv1. The current efficiency CE2' may be greater than a current efficiency CE2 (see Fig. 17). The current efficiency CE3' may be greater than a current efficiency CE3 (see Fig. 17). The amount of production Ac1-2' may be greater than an amount of production Ac1-2 (see Fig. 17). The amount of production Ac1-3' may be greater than an amount of production Ac1-3 (see Fig. 17). This allows an operation support apparatus 100 to support operation of the electrolyzers 90 such that a target amount of production At of a product P produced over a period of time Tw (see Fig. 9) can be achieved while the operation of the electrolyzer 90-1 is stopped.

A determination unit 30 (see Fig. 5) may determine a magnitude relation between the third value of current Iv3 and a fourth value of current Iv4 for each time T. If the determination unit 30 determines that the third value of current Iv3 is equal to or smaller than the fourth value of current Iv, a control unit 40 (see Fig. 5) may control currents flowing through a plurality of electrolyzers 90 to the third value of current Iv3. In the present example, the control unit 40 controls a current flowing through the electrolyzer 90-2 and the electrolyzer 90-3 to a third current Iv3.

The determination unit 30 (see Fig. 5) may further determine a magnitude relation between the third value of current Iv3 and a second value of current Iv2. If the determination unit 30 determines that the third value of current Iv3 is equal to or smaller than the fourth value of current Iv and is equal to or greater than the second value of current Iv2, the control unit 40 (see Fig. 5) may control the currents flowing through the plurality of electrolyzers 90 to the third value of current Iv3. The determination unit 30 (see Fig. 5) may determine, for each time T, the magnitude relation between the third value of current Iv3 and the fourth value of current Iv4 as well as the magnitude relation between the third value of current Iv3 and the second value of current Iv2.

A concentration $C_{ho}$ of the product P is expressed by Equation 9 described below. If a liquid 70 (see Fig. 3) is an NaCl (sodium chloride) aqueous solution, and a liquid 72 (see Fig. 3) is an NaOH (sodium hydroxide) aqueous solution, the concentration $C_{ho}$ is a concentration of NaOH (sodium hydroxide, so-called caustic soda). If the liquid 70 (see Fig. 3) is a KCl (potassium chloride) aqueous solution, and the liquid 72 (see Fig. 3) is a KOH (potassium hydroxide) aqueous solution, the concentration $C_{ho}$ is a concentration of KOH (potassium hydroxide).

$$C_{ho} = \frac{V_{total} \times D \times 0.32}{\{(V_{total} \times D \times 0.32) + 1.060 \times NC \times NE_1 \times t^{(k)}\}} \times 32 \qquad (9\text{-}1)$$

$$V_{total} = (V_{cell} + V_{other}) \times NC \times NE_1 + V_{tank} \qquad (9\text{-}2)$$

In Equation 9, $V_{cell}$ represents volume of each pair. In the present example, volume of all pairs is represented as $V_{cell}$. $V_{other}$ represents a total of volume of each layer such as a subheader or a gas-liquid separation tank. A liquid 76 and a gas 78 (see Fig. 3) are discharged from an electrolyzer 90 to the subheader. The liquid 76 and the gas 78 discharged to the subheader are separated into the liquid 76 and the gas 78 in the gas-liquid separation tank.

In Equation 9, $V_{tank}$ represents volume of a circulation tank. The circulation tank is a tank in which the liquid 76 separated in the gas-liquid separation tank mentioned above is temporarily accumulated. NC represents the number of pairs per one electrolyzer 90. NE represents the number of electrolyzers 90 in an electrolytic apparatus 200. $NE_1$ represents the number of electrolyzers 90 that have been stopped to operate. D represents a density ($kg/m^3$) of the product P. $t^{(k)}$ represents a waiting time. $t^{(k)}$ may represent any time T of times T1 to T(n-1).

A concentration Cs (see Fig. 14) is expressed by Equation 10 described below.

$$C_s = \frac{G \times 1000 + 1.27 \times NC \times NE_1 \times 1000 \times t^{(k)}}{(V_{total} \times 1000 + 1.060 \times NC \times NE_1 \times t^{(k)}) \times C_{ho}} \times 32 \qquad (10\text{-}1)$$

$$G = C_{initial} \times V_{total} \qquad (10\text{-}2)$$

$$C_{initial} = (-\beta \times CE + \beta) \times \left(\frac{I^{(k)}}{10.8}\right)^{-\gamma} \qquad (10\text{-}3)$$

A predetermined concentration of the product P in the liquid 75 (see Fig. 3) is referred to as a first concentration C1. The first concentration C1 may be a minimum concentration that ensures a predetermined quality of the product P. A predetermined impurity concentration in the product P is referred to as a second concentration C2. The second concentration C2 may be a maximum impurity concentration that ensures the predetermined quality of the product P.

The determination unit 30 (see Fig. 5) may determine whether the concentration $C_{ho}$ is higher than the first concentration C1. The determination unit 30 may determine whether the concentration Cs is lower than the second concentration C2. If the determination unit 30 determines that the concentration $C_{ho}$ is higher than the first concentration C1 and that the concentration Cs is lower than the second concentration C2, the control unit 40 (see Fig. 5) may control a current flowing through one electrolyzer 90 to be stopped that has been specified by the specification unit 20 (see Fig. 5), to be smaller than a current flowing through another electrolyzer 90. If the determination unit 30 determines that the

concentration $C_{ho}$ is higher than the first concentration C1 and that the concentration Cs is lower than the second concentration C2, the liquid 70 and the liquid 72 (see Figs. 1 to 3) may circulate through one electrolyzer 90 that has been stopped.

If the determination unit 30 determines that the concentration $C_{ho}$ is equal to or lower than the first concentration C1 or that the concentration Cs is equal to or higher than the second concentration C2, the liquid 73 and the liquid 75 (see Fig. 3) may be discharged from an electrolyzer 90 that has been stopped.

If the determination unit 30 (see Fig. 5) determines that the third value of current Iv3 is smaller than the second value of current Iv2 during at least one time T, the specification unit 20 (see Fig. 5) may further specify another electrolyzer 90 to be stopped among the plurality of electrolyzers 90. The another electrolyzer 90 is an electrolyzer 90 different from the one electrolyzer 90 mentioned above. The another electrolyzer 90 may be, among the plurality of electrolyzers 90, any one electrolyzer 90 excluding the one electrolyzer 90 mentioned above, or any two or more electrolyzers 90. The specification unit 20 may specify an electrolyzer 90 with the smallest amount of production Ac among electrolyzers 90 in operation, as another electrolyzer 90 to be stopped.

The calculation unit 10 (see Fig. 5) may further calculate, for each time T, a value of current for a case where one electrolyzer 90 and another electrolyzer 90 have been stopped, as the third value of current Iv3. The determination unit 30 (see Fig. 5) may determine the magnitude relation between the third value of current Iv3 for a case where one electrolyzer 90 and another electrolyzer 90 have been stopped, and the fourth value of current Iv4. If the determination unit 30 determines that the third value of current Iv3 is equal to or smaller than the fourth value of current Iv4, the control unit 40 (see Fig. 5) may control the currents flowing through the plurality of electrolyzers 90 to the third value of current Iv3.

The determination unit 30 (see Fig. 5) may further determine the magnitude relation between the third value of current Iv3 for a case where one electrolyzer 90 and another electrolyzer 90 have been stopped, and the second value of current Iv2. If the determination unit 30 determines that the third value of current Iv3 is equal to or smaller than the fourth value of current Iv4 and is equal to or greater than the second value of current Iv2, the control unit 40 (see Fig. 5) may control the currents flowing through the plurality of electrolyzers 90 to the third value of current Iv3.

If the determination unit 30 (see Fig. 5) determines that the third value of current Iv3 for a case where one electrolyzer 90 and another electrolyzer 90 have been stopped is smaller than the second value of current Iv2, the specification unit 20 may further specify an electrolyzer 90 to be stopped. The calculation unit 10 (see Fig. 5) may calculate a value of current for a case where a plurality of electrolyzers 90 that have been specified have been stopped. The specification unit 20 (see Fig. 5) may further specify an electrolyzer 90 to be stopped, until it is determined that the value of current is equal to or greater than the second value of current Iv2.

If the specification unit 20 (see Fig. 5) specifies all of the plurality of electrolyzers 90 as electrolyzers 90 to be stopped, the calculation unit 10 (see Fig. 5) may further calculate, for each time T, a value of current to be applied to the plurality of electrolyzers 90 by setting the currents flowing through the plurality of electrolyzers 90 to the second value of current Iv2 or the fourth value of current Iv4. The calculation unit 10 may further calculate, for each time T, the value of current to be applied to the plurality of electrolyzers 90 by setting a current flowing through all of the electrolyzers 90 to the second value of current Iv2 or the fourth value of current Iv4.

If the determination unit 30 (see Fig. 5) determines that the third value of current Iv3 is greater than the fourth value of current Iv4 during the at least one time T, the calculation unit 10 (see Fig. 5) may further calculate, for each time T, the value of current to be applied to the plurality of electrolyzers 90 by setting the currents flowing through the plurality of electrolyzers 90 during the at least one time T to the fourth value of current Iv4. The at least one time T refers to at least any one time T of the times T1 to T(n-1) in Fig. 15.

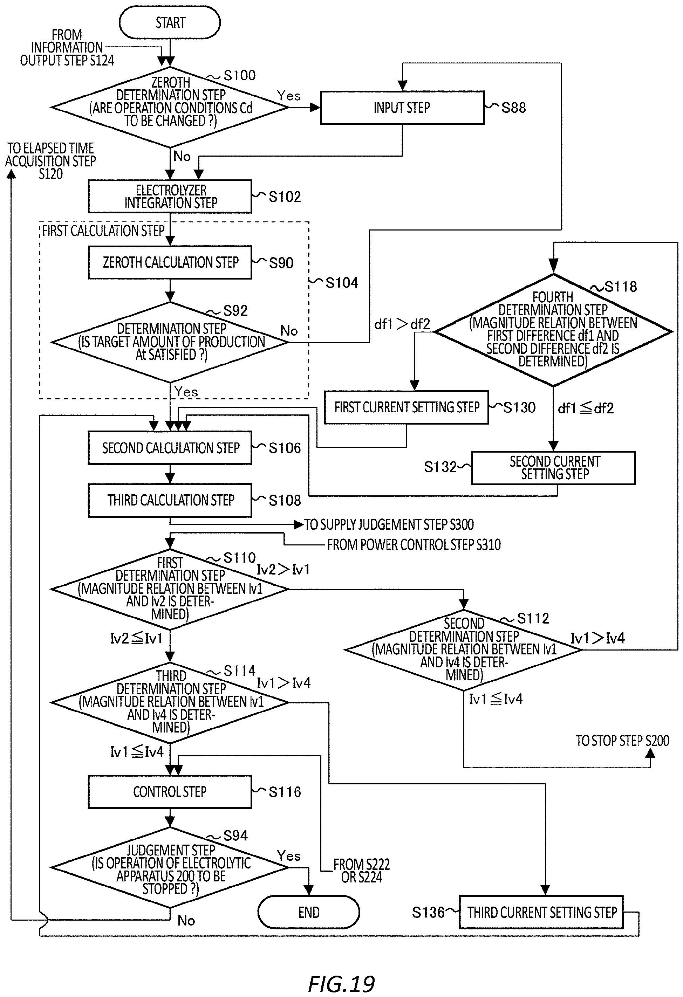

Fig. 19 is a flowchart showing one example of an operation support method according to one embodiment of the present invention. The operation support method according to one embodiment of the present invention is an operation support method for supporting operation of electrolyzers 90 (see Fig. 1).

The operation support method includes a first calculation step S104 (see Fig. 19). The operation support method may include a zeroth determination step S100, an electrolyzer integration step S102, and an input step S88. The operation support method may include a second calculation step S106, a third calculation step S108, a first determination step S110, a second determination step S112, a third determination step S114, a control step S116, a fourth determination step S118, and a judgement step S94. The operation support method may include a first current setting step S130, a second current setting step S132, and a third current setting step S136. The operation support method may include an elapsed time acquisition step S120, an information output step S124, and a stop step S200.

The zeroth determination step S100 is a step in which it is determined whether operation conditions Cd of an electrolyzer 90 are to be changed. The operation conditions Cd may include at least one of a current efficiency CE, a voltage CV, a target amount of production At, an electricity cost Ep, an amount of power consumption Ec, or a length of each time of times T1 to T(n-1). The zeroth determination step S100 may be a step in which a determination unit 30 (see Fig. 5) determines whether the operation conditions Cd are to be changed, or may be a step in which a user of an operation support apparatus 100 determines whether the operation conditions Cd are to be changed.

If it is determined, in the zeroth determination step S100, that the operation conditions Cd are to be changed, the operation support method proceeds to the input step S88. If it is not determined, in the zeroth determination step S 100, that the operation conditions Cd are to be changed, the operation support method proceeds to the electrolyzer integration step S102.

The input step S88 is a step in which input parameters to the operation support apparatus 100 (see Fig. 5) are inputted. The input step S88 may be a step in which the user of the operation support apparatus 100 inputs the operation conditions Cd by using an input unit 50 (see Fig. 5).

The electrolyzer integration step S102 is a step in which a calculation unit 10 (see Fig. 5) integrates a plurality of electrolyzers 90 into one electrolyzer 90 in calculation of an amount of production of a product P (see Fig. 11 and Fig. 12). In the present example, the calculation unit 10 integrates electrolyzers 90-1 to 90-M into one electrolyzer 90.

The first calculation step S104 may have a zeroth calculation step S90 and a determination step S92. The zeroth calculation step S90 is a step in which the calculation unit 10 (see Fig. 5) calculates an amount of production Ac of the product P for each predetermined time T for a case where a fourth value of current Iv4 is passed through the plurality of electrolyzers 90 operating in parallel. The zeroth calculation step S90 may be a step in which the calculation unit 10 calculates the amount of production Ac for each time T for a case where the fourth value of current Iv4 is passed through all of the electrolyzers 90 operating in parallel. The determination step S92 is a step in which the determination unit 30 (see Fig. 5) determines whether the amount of production Ac satisfies the target amount of production At.

If it is determined, in the determination step S92, that the amount of production Ac satisfies the target amount of production At, the operation support method proceeds to the second calculation step S106. If it is not determined, in the determination step S92, that the amount of production Ac satisfies the target amount of production At, the operation support method returns to the input step S88. The first calculation step S104 may be a step in which the calculation unit 10 (see Fig. 5) calculates the amount of production P that satisfies the target amount of production At over a period of time Tw (see Fig. 9 and Fig. 13) and that minimizes the electricity cost Ep or the amount of power consumption Ec over the period of time Tw.

The second calculation step S106 is a step in which the calculation unit 10 (see Fig. 5) calculates, for each time T, a first value of current Iv1 to be applied to the plurality of electrolyzers 90, based on the amount of production Ac of the product P. The third calculation step S108 is a step in which the calculation unit 10 calculates a second value of current Iv2 to be applied to the plurality of electrolyzers 90, based on an impurity concentration Cs (see Fig. 14) in the product P or on a temperature of an electrolytic solution decomposed by an electrolyzer 90. The second value of current Iv2 may be a minimum value of current for satisfying a predetermined quality of the product P.

The first determination step S110 is a step in which the determination unit 30 (see Fig. 5) determines a magnitude relation between the first value of current Iv1 for each time T calculated in the second calculation step S106 and the second value of current Iv2 calculated in the third calculation step S108. If it is determined, in the first determination step S110, that the first value of current Iv1 during a first time Ta1 is smaller than the second value of current Iv2, the operation support method proceeds to the second determination step S112. As mentioned above, the first time Ta1 is at least one time T of the times T1 to T(n-1) (see Fig. 9 and Fig. 13). If it is determined, in the first determination step S110, that the first value of current Iv1 is equal to or greater than the second value of current Iv2, the operation support method proceeds to the third determination step S114.

The second determination step S112 is a step in which the determination unit 30 (see Fig. 5) determines a magnitude relation between the first value of current Iv1 for each time T calculated in the second calculation step S106 and the fourth value of current Iv4. If it is determined, in the second determination step S112, that the first value of current Iv1 is equal to or smaller than the fourth value of current Iv4, the operation support method proceeds to the stop step S200. If it is determined, in the second determination step S112, that the first value of current Iv1 is greater than the fourth value of current Iv4, the operation support method proceeds to the fourth determination step S118.

The third determination step S114 is a step in which the determination unit 30 (see Fig. 5) determines the magnitude relation between the first value of current Iv1 for each time T calculated in the second calculation step S106 and the fourth value of current Iv4. If it is determined, in the third determination step S114, that the first value of current Iv1 is equal to or smaller than the fourth value of current Iv4, the operation support method proceeds to the control step S116. If it is determined, in the third determination step S114, the first value of current Iv1 is greater than the fourth value of current Iv4, the operation support method proceeds to the third current setting step S136.

The control step S116 may be a step in which, if it is determined, in the first determination step S110, that the first value of current Iv1 is equal to or greater than the second value of current Iv2 and it is determined, in the third determination step S114, that the first value of current Iv1 is equal to or smaller than the fourth value of current Iv4, a control unit 40 (see Fig. 5) controls currents flowing through the plurality of electrolyzers 90 to the first value of current Iv1. The judgement step S94 is a step in which judgement is made as to whether operation of an electrolytic apparatus 200 is to be stopped. The judgement step S94 may be a step in which the determination unit 30 (see Fig. 5) judges whether the operation of the electrolytic apparatus 200 is to be stopped, or may be a step in which the user of the operation support apparatus 100 judges whether the operation of the electrolytic apparatus 200 is to be stopped.

If it is judged, in the judgement step S94, that the operation of the electrolytic apparatus 200 is to be stopped, the operation support method ends support for operation of the electrolyzer 90. If it is not judged, in the judgement step S94, that the operation of the electrolytic apparatus 200 is to be stopped, the operation support method proceeds to the elapsed time acquisition step S120.

The second calculation step S106 may be a step in which, if it is determined, in the first determination step S110, that the first value of current Iv1 during the first time Ta1 is smaller than the second value of current Iv2 and if it is determined, in the second determination step S112, that the first value of current Iv1 during a second time Ta2 is greater than the fourth value of current Iv4, the calculation unit 10 (see Fig. 5) further calculates, for each time T, a value of current to be applied to the plurality of electrolyzers 90 by setting the currents flowing through the plurality of electrolyzers 90 during the first time Ta1 to the second value of current Iv2 or by setting the currents flowing through the plurality of electrolyzers 90 during the second time Ta2 to the fourth value of current Iv4.

The fourth determination step S118 is a step in which the determination unit 30 (see Fig. 5) determines a magnitude relation between a first difference df1 between the second value of current Iv2 and the first value of current Iv1 during the first time Ta1 (see Fig. 16), and a second difference df2 between the first value of current Iv1 and the fourth value of current Iv4 during the second time Ta2 (see Fig. 16). If it is determined, in the fourth determination step S118, that the first difference df1 is greater than the second difference df2, the operation support method proceeds to the first current setting step S130. If it is determined, in the fourth determination step S118, that the second difference df2 is greater than the first difference df1, the operation support method proceeds to the second current setting step S132.

The first current setting step S130 is a step of setting, to the second value of current Iv2, the currents flowing through the plurality of electrolyzers 90 during the first time Ta1 (see Fig. 16). The second current setting step S132 is a step of setting, to the fourth value of current Iv4, the currents flowing through the plurality of electrolyzers 90 during the second time Ta2 (see Fig. 16). In the present example, the second calculation step S106 is a step in which the calculation unit 10 (see Fig. 5) further calculates, for each time T, the value of current to be applied to the plurality of electrolyzers 90, based on the value of current set in the first current setting step S130 or on the value of current set in the second current setting step S132.

The third current setting step S136 is a step of setting, to the fourth value of current Iv4, the currents flowing through the plurality of electrolyzers 90 during the second time Ta2 (see Fig. 16). In the present example, the second calculation step S106 is a step in which the calculation unit 10 (see Fig. 5) further calculates, for each time T, the value of current to be applied to the plurality of electrolyzers 90, based on the value of current set in the third current setting step S136.

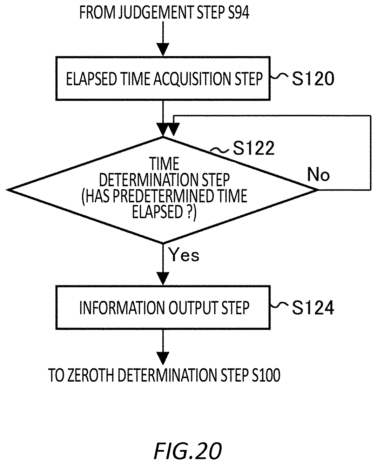

Fig. 20 is a flowchart showing one example of an operation support method according to one embodiment of the present invention. The operation support method may include an elapsed time acquisition step S120, a time determination step S122, and an information output step S124.

The elapsed time acquisition step S120 is a step in which a determination unit 30 (see Fig. 5) acquires a time elapsed Ts since it was determined, in a third determination step S114 (see Fig. 19), that a first value of current Iv1 is equal to or smaller than a fourth value of current Iv4. The time determination step S122 is a step in which determination is made as to a magnitude relation between the time elapsed Ts acquired in the elapsed time acquisition step S120 and a predetermined time Tp. As mentioned above, the time Tp may be a period of time from when judgement is made as to whether operation conditions of an electrolyzer 90 are to be changed to when the next judgement is made as to whether the operation conditions of the electrolyzer 90 are to be changed. The time Tp may be a time Tw shown in Fig. 13 and Fig. 15. If it is determined, in the time determination step S122, that the time elapsed Ts is longer than the time Tp, the operation support method proceeds to the information output step S124. If it is determined, in the time determination step S122, that the time elapsed Ts is shorter than the time Tp, the determination unit 30 continues to determine the magnitude relation between the time elapsed Ts and the time Tp until it is determined that the time elapsed Ts is longer than the time Tp.

The information output step S124 is a step in which a control unit 40 (see Fig. 5) outputs information related to whether operation conditions Cd of a plurality of electrolyzers 90 are to be changed. The control unit 40 outputting the information may refer to the control unit 40 causing a display unit 52 (see Fig. 5) to display the information. After the information output step S124, the operation support method returns to a zeroth determination step S100.

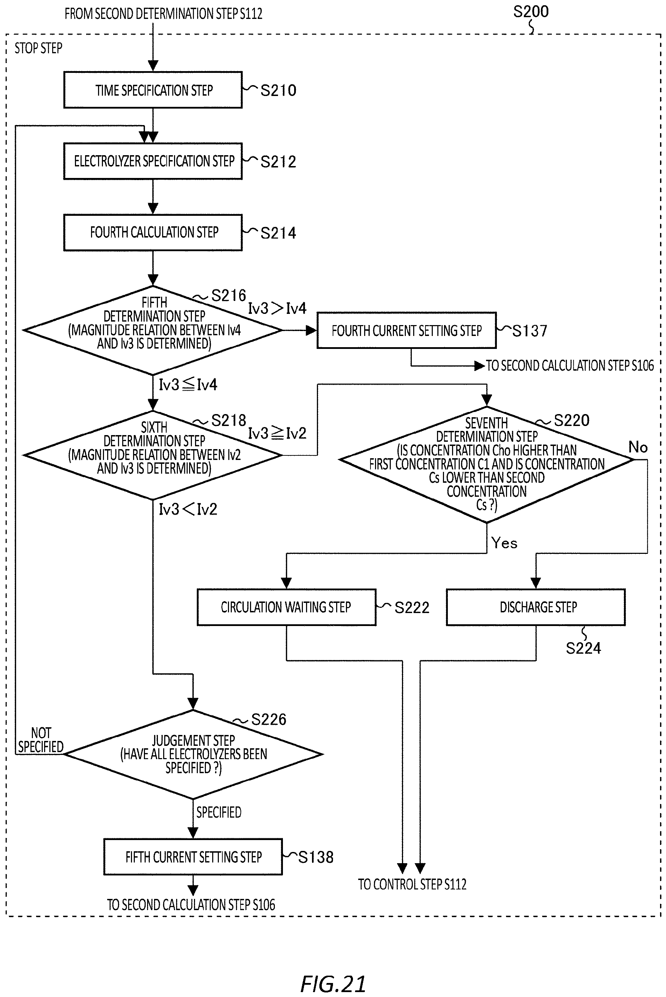

Fig. 21 is a flowchart showing one example of details of the stop step S200 in Fig. 19. The operation support method includes an electrolyzer specification step S212. The operation support method may include a fourth calculation step S214, a fifth determination step S216, a sixth determination step S218, and a seventh determination step S220. The operation support method may include a time specification step S210, a judgement step S226, a waiting circulation step S222, and a discharge step S224.

The time specification step S210 is a step in which a specification unit 20 (see Fig. 5) specifies a time T during which the amount of production Ac is the smallest (see Fig. 15). The electrolyzer specification step S212 is a step in which the specification unit 20 (see Fig. 5) specifies an electrolyzer 90 to be operated among the plurality of electrolyzers 90, based on the amount of production Ac calculated in the first calculation step S104 (see Fig. 19). The electrolyzer specification step S212 may be a step in which, if it is determined, in the second determination step S112, that the first value of current Iv1 is equal to or smaller than the fourth value of current Iv4, the specification unit 20 specifies one electrolyzer 90 to be stopped among the plurality of electrolyzers 90. The electrolyzer specification step S212 may be a step in which, if it is determined, in the third determination step S114, that the first value of current Iv1 during the second time Ta2 (see Fig. 16) is greater than the fourth value of current Iv4, the specification unit 20 specifies one electrolyzer 90 to be stopped among the plurality of electrolyzers 90. The electrolyzer specification step S212 may be a step for specifying an electrolyzer 90 to be stopped among the plurality of electrolyzers 90 during the time T specified in the time specification step S210.

The fourth calculation step S214 is a step in which the calculation unit 10 (see Fig. 5) further calculates, for each time T, a third value of current Iv3 for a case where one electrolyzer 90 specified in the electrolyzer specification step 212 has been stopped. The fifth determination step S216 is a step in which the determination unit 30 (see Fig. 5) determines a magnitude relation between the third value of current Iv3 and the fourth value of current Iv4.

If it is determined, in the fifth determination step S216, that the third value of current Iv3 is equal to or smaller than the fourth value of current Iv4, the operation support method proceeds to the sixth determination step S218. If it is determined, in the fifth determination step S216, that the third value of current Iv3 is greater than the fourth value of current Iv4, the operation support method proceeds to the fourth current setting step S137 (see Fig. 19).

The fourth current setting step S137 (see Fig. 19) is a step of setting, to the fourth value of current Iv4, the currents flowing through the plurality of electrolyzers 90 during at least one time T for which it is determined, in the fifth determination step S216, that the third value of current Iv3 is greater than the fourth value of current Iv4. After the fourth current setting step S137, the operation support method returns to the second calculation step S106 (see Fig. 19). The second calculation step S106 is a step in which the calculation unit 10 (see Fig. 5) further calculates, for each time T, the value of current to be applied to the plurality of electrolyzers 90 by setting, to the fourth value of current Iv4, the currents flowing through the plurality of electrolyzers 90 during the at least one time T for which it is determined that the third value of current Iv3 is greater than the fourth value of current Iv4.

The sixth determination step S218 is a step in which the determination unit 30 (see Fig. 5) determines a magnitude relation between the third value of current Iv3 and the second value of current Iv2. If it is determined, in the sixth determination step S218, that the third value of current Iv3 is equal to or greater than the second value of current Iv2, the operation support method proceeds to the seventh determination step S220. If it is determined, in the sixth determination step S218, that the third value of current Iv3 is smaller than the second value of current Iv2, the operation support method proceeds to the judgement step S226.

The judgement step S226 is a step in which the determination unit 30 (see Fig. 5) judges whether all of the plurality of electrolyzers 90 have been specified as electrolyzers 90 to be stopped. If it is not judged, in the judgement step S226, that all of the plurality of electrolyzers 90 have been specified as the electrolyzers 90 to be stopped, the operation support method returns to the electrolyzer specification step S212. If it is judged, in the judgement step S226, that all of the plurality of electrolyzers 90 have been specified as the electrolyzers 90 to be stopped, the operation support method proceeds to the fifth current setting step S138.

The electrolyzer specification step S212 may be a step in which, if it is determined, in the sixth determination step 218, the third value of current Iv3 during the at least one time T is smaller than the second value of current Iv2, the specification unit 20 (see Fig. 5) further specifies another electrolyzer 90 to be stopped among the plurality of electrolyzers 90. In the present example, the electrolyzer specification step S212 is a step in which, if it is determined, in the sixth determination step 218, that the third value of current Iv3 during the at least one time T is smaller than the second value of current Iv2 and it is not judged, in the judgement step S226, that all of the plurality of electrolyzers 90 have been specified as the electrolyzers 90 to be stopped, the specification unit 20 further specifies another electrolyzer 90 to be stopped among the plurality of electrolyzers 90. The another electrolyzer 90 is an electrolyzer 90 different from the one electrolyzer 90 mentioned above. The another electrolyzer 90 may be, among the plurality of electrolyzers 90, any one electrolyzer 90 excluding the one electrolyzer 90 mentioned above, or any two or more electrolyzers 90. The specification unit 20 may specify an electrolyzer 90 with the smallest amount of production Ac among electrolyzers 90 in operation, as another electrolyzer 90 to be stopped.

The fourth calculation step S214 may be a step in which the calculation unit 10 (see Fig. 5) further calculates, for each time T, a value of current for a case where one electrolyzer 90 and another electrolyzer 90 have been stopped, as the third value of current Iv3. The fifth determination step S216 may be a step in which the determination unit 30 (see Fig. 5) determines a magnitude relation between the third value of current Iv3 for a case where one electrolyzer 90 and another electrolyzer 90 have been stopped, and the fourth value of current Iv4. The sixth determination step S218 may be a step in which the determination unit 30 further determines a magnitude relation between the third value of current Iv3 for a case where one electrolyzer 90 and another electrolyzer 90 have been stopped, and the second value of current Iv2.

The electrolyzer specification step S212 may be a step in which, if it is determined, in the sixth determination step S218, that the third value of current Iv3 for a case where one electrolyzer 90 and another electrolyzer 90 have been stopped is smaller than the second value of current Iv2 and it is not judged, in the judgement step S226, that all of the plurality of electrolyzers 90 have been specified as the electrolyzer 90 to be stopped, the specification unit 20 further specifies the electrolyzer 90 to be stopped. The electrolyzer specification step S212 may be a step in which the electrolyzer 90 to be stopped is specified until it is determined, in the sixth determination step S218, that the third value of current Iv3 is equal to or greater than the second value of current Iv2.

The fifth current setting step S138 is a step in which the currents flowing through the plurality of electrolyzers 90 is set to the second value of current Iv2. The fifth current setting step S138 (see Fig. 19) may be a step of setting, to the second value of current Iv2, the currents flowing through the plurality of electrolyzers 90 during another time T for which it is determined, in the sixth determination step S218, that the third value of current Iv3 is smaller than the second value of current Iv. After the fifth current setting step S138, the operation support method returns to the second calculation step S106 (see Fig. 19). The second calculation step S106 may be a step in which the calculation unit 10 (see Fig. 5) further calculates, for each time T, the value of current to be applied to the plurality of electrolyzers 90 by setting the currents flowing through the plurality of electrolyzers 90 to the second value of current Iv2. The second calculation step S106 (see Fig. 19) may be a step in which the calculation unit 10 (see Fig. 5) further calculates, for each time T, the value of current to be applied to the plurality of electrolyzers 90 by setting the currents flowing through the plurality of electrolyzers 90 during the another time T to the second value of current Iv2. After the fifth current setting step S138, the operation support method returns to the second calculation step S106 (see Fig. 19).

The seventh determination step S220 is a step in which the determination unit 30 (see Fig. 5) determines whether a concentration $C_{ho}$ is higher than a predetermined first concentration C1 of the product P and whether the concentration Cs is lower than a predetermined second concentration C2 of the product P. The first concentration C1 may be a minimum concentration that ensures the predetermined quality of the product P. The second concentration C2 may be a maximum impurity concentration that ensures the predetermined quality of the product P.

If it is determined, in the seventh determination step S220, that the concentration $C_{ho}$ is higher than the first concentration C1 and that the concentration Cs is lower than the second concentration C2, the operation support method proceeds to the waiting circulation step S222. If it is not determined, in the seventh determination step S220, that the concentration $C_{ho}$ is higher than the first concentration C1 and that the concentration Cs is lower than the second concentration C2, the operation support method proceeds to the discharge step S224.

The waiting circulation step S222 is a step in which, in a state where the electrolyzer 90 specified as the electrolyzer 90 to be stopped in the electrolyzer specification step S212 has been stopped, a liquid 70 and a liquid 72 (see Figs. 1 to 3) are circulated through the electrolyzer 90 that has been stopped. The discharge step S224 is a step in which a liquid 73 and a liquid 75 (see Fig. 3) are discharged from the electrolyzer 90 that has been stopped.

The control step 112 may be a step in which, if it is determined, in the seventh determination step S220, that the concentration $C_{ho}$ is higher than the first concentration C1 and that the concentration Cs is lower than the second concentration C2, the control unit 40 (see Fig. 5) controls a current flowing through the electrolyzer 90 to be stopped that has been specified in the electrolyzer specification step S212, to be smaller than a current flowing through another electrolyzer 90, or the control step 112 may be a step in which the control unit 40 controls the current flowing through the electrolyzer 90 to be stopped, to zero.

The control step S112 may be a step in which, if it is determined, in the fifth determination step S216, that the third value of current Iv3 is equal to or smaller than the fourth value of current Iv4, the control unit 40 (see Fig. 5) controls the currents flowing through the plurality of electrolyzers 90 to the third value of current Iv3. The control step S112 may be a step in which, if it is determined, in the fifth determination step S216, that the third value of current Iv3 is equal to or smaller than the fourth value of current and it is determined, in the sixth determination step S218, that the third value of current Iv3 is equal to or greater than the second value of current Iv2, the control unit 40 controls the currents flowing through the plurality of electrolyzers 90 to the third value of current Iv3.

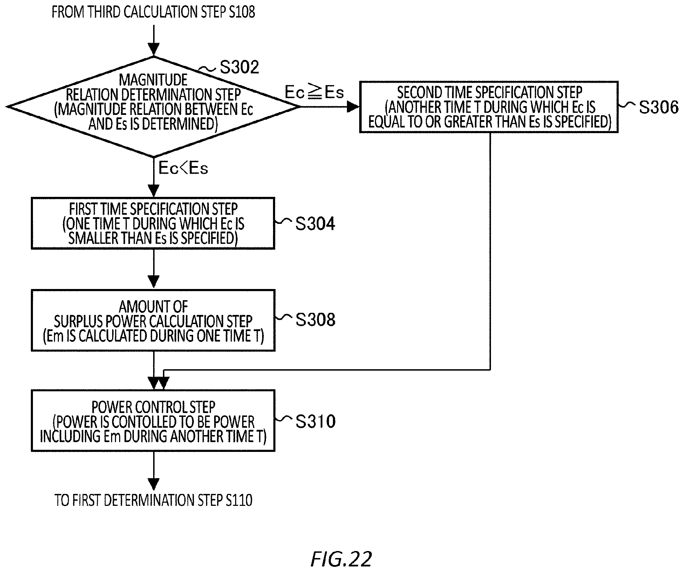

Fig. 22 is a flowchart showing one example of an operation support method according to one embodiment of the present invention. The operation support method may include a magnitude relation determination step S302, a first time specification step S304, a second time specification step S306, an amount of surplus power calculation step S308, and a power control step S310.

The magnitude relation determination step S302 is a step in which a determination unit 30 determines a magnitude relation between an amount of power consumption Ec and an available amount of power supply Es. The determination unit 30 may determine, for each time T, a magnitude relation between the amount of power consumption Ec and the available amount of power supply Es.

The first time specification step S304 is a step in which, if it is determined, in the magnitude relation determination step S302, that the amount of power consumption Ec is smaller than the available amount of power supply Es, a specification unit 20 specifies one time T during which the amount of power consumption Ec for each time T is smaller than the available amount of power supply Es to an electrolyzer 90 for each time T. The second time specification step S306 is a step in which, if it is determined, in the magnitude relation determination step S302, that the amount of power consumption Ec is equal to or greater than the available amount of power supply Es, the specification unit 20 specifies another time T during which the amount of power consumption Ec for each time T is equal to or greater than the available amount of power supply Es to the electrolyzer 90 for each time T.

The amount of surplus power calculation step S308 is a step in which a calculation unit 10 calculates, during the one time T, an amount of surplus power Em that is a difference between the available amount of power supply Es and the amount of power consumption Ec. The power control step S310 is a step in which a control unit 40 controls power supplied to the electrolyzer 90 to be power including the amount of surplus power Em, during the another time T for which it is determined that the amount of power consumption Ec is equal to or greater than the available amount of power supply Es.

Various embodiments of the present invention may be described with reference to flowcharts and block diagrams. According to the various embodiments of the present invention, a block may represent (1) a stage of a process where operations are executed or (2) a section of an apparatus having a role for executing operations.

Certain stages may be executed by a dedicated circuit, a programmable circuit, or a processor. Certain sections may be implemented by a dedicated circuit, a programmable circuit, or a processor. The programmable circuit and the processor may be supplied together with a computer readable instruction. The computer readable instruction may be stored on a computer readable medium.

The dedicated circuit may include at least one of a digital hardware circuit and an analog hardware circuit. The dedicated circuit may include at least one of an integrated circuit (IC) and a discrete circuit. The programmable circuit may include a hardware circuit for logical AND, logical OR, logical XOR, logical NAND, logical NOR, or another logical operation. The programmable circuit may include a reconfigurable hardware circuit including a flip-flop, a register, a memory element such as a field programmable gate array (FPGA) and a programmable logic array (PLA), and the like.

Computer readable medium may include any tangible device that can store instructions for execution by a suitable device. Since the computer readable medium includes the tangible device, the computer readable medium having the instruction stored on the device includes an article of manufacture including an instruction that may be executed in order to create means to execute an operation designated by a flowchart or a block diagram.

The computer readable medium may be, for example, an electronic storage medium, a magnetic storage medium, an optical storage medium, an electromagnetic storage medium, a semiconductor storage medium, or the like. More specifically, for example, the computer readable medium may be a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a Blu-ray (registered trademark) disk, a memory stick, an integrated circuit card, or the like.

The computer readable instruction may include any of an assembler instruction, an instruction-set-architecture (ISA) instruction, a machine instruction, a machine dependent instruction, a microcode, a firmware instruction, state-setting data, a source code, and an object code. The source code and the object code may be described in any combination of one or more programming languages including an object oriented programming language and a procedural programming language in related art. The object oriented programming language may be, for example, Smalltalk (registered trademark), JAVA (registered trademark), C++, or the like. The procedural programming language may be, for example, a "C" programming language.

The computer readable instruction may be provided to a general purpose computer, a special purpose computer, or a processor or a programmable circuit of another programmable data processing apparatus locally or via a local area network (LAN) or a wide area network (WAN) such as the Internet. The processor or programmable circuit of a general purpose computer, a special purpose computer, or another programmable data processing apparatus may execute a computer readable instruction in order to create means for executing the operation designated in the flowchart shown in Figs. 19 to 22 or the block diagram shown in Fig. 5. The processor may be, for example, a computer processor, a processing unit, a microprocessor, a digital signal processor, a controller, a microcontroller, or the like.

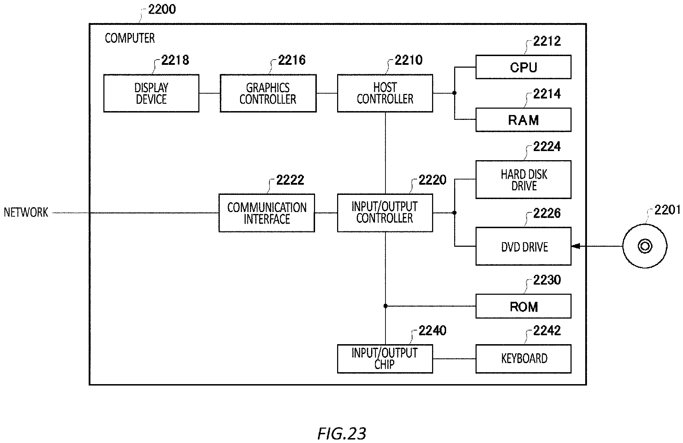

Fig. 23 is a diagram showing one example of a computer 2200 in which an operation support apparatus 100 according to an embodiment of the present invention may be entirely or partially embodied. A program installed in the computer 2200 can cause the computer 2200 to function as operations associated with the operation support apparatus 100 according to an embodiment of the present invention or one or more sections of the operation support apparatus 100 or to execute the operations or the one or more sections, or can cause the computer 2200 to execute each of steps (see Figs. 19 to 22) according to the operation support method of the present invention. The program may be executed by the CPU 2212 in order to cause the computer 2200 to execute certain operations associated with some or all of the blocks in the flowchart (Figs. 19 to 22) and the block diagrams (Fig. 5) described in the present specification.

The computer 2200 according to the present embodiment includes a CPU 2212, a RAM 2214, a graphics controller 2216, and a display device 2218. The CPU 2212, the RAM 2214, the graphics controller 2216, and the display device 2218 are mutually connected by a host controller 2210. The computer 2200 further includes input/output unit such as a communication interface 2222, a hard disk drive 2224, a DVD-ROM drive 2226, and an IC card drive. The communication interface 2222, the hard disk drive 2224, the DVD-ROM drive 2226, and the IC card drive, and the like are connected to the host controller 2210 via an input/output controller 2220. The computer further includes legacy input/output units such as a ROM 2230 and a keyboard 2242. The ROM 2230, the keyboard 2242, and the like are connected to the input/output controller 2220 via an input/output chip 2240.

The CPU 2212 operates in accordance with programs stored in the ROM 2230 and the RAM 2214, thereby controlling each unit. The graphics controller 2216 acquires image data generated by the CPU 2212 on a frame buffer or the like provided in the RAM 2214 or in the RAM 2214 itself to cause the image data to be displayed on the display device 2218.

The communication interface 2222 communicates with another electronic device via a network. The hard disk drive 2224 stores programs and data used by the CPU 2212 in the computer 2200. The DVD-ROM drive 2226 reads the programs or the data from the DVD-ROM 2201, and provides the read programs or data to the hard disk drive 2224 via the RAM 2214. The IC card drive reads programs and data from an IC card, or writes programs and data to the IC card.

The ROM 2230 stores a boot program or the like executed by the computer 2200 at the time of activation, or a program depending on the hardware of the computer 2200. The input/output chip 2240 may connect various input/output unit via a parallel port, a serial port, a keyboard port, a mouse port, or the like to the input/output controller 2220.

The program is provided by a computer readable medium such as the DVD-ROM 2201 or the IC card. The program is read from a computer readable medium, installed in the hard disk drive 2224, the RAM 2214, or the ROM 2230 which are also examples of the computer readable medium, and executed by the CPU 2212. The information processing described in these programs is read by the computer 2200 and provides cooperation between the programs and the above-described various types of hardware resources. An apparatus or method may be constituted by realizing the operation or processing of information in accordance with the usage of the computer 2200.

For example, when a communication is executed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

The CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, or the like. The CPU 2212 may execute various types of processing on the data on the RAM 2214. The CPU 2212 may next write back the processed data to the external recording medium.

Various types of information, such as various types of programs, data, tables, and databases, may be stored in the recording medium to undergo information processing. The CPU 2212 may execute various types of processing on the data read from the RAM 2214, which includes various types of operations, information processing, condition judging, conditional branch, unconditional branch, search or replacement of information, or the like, as described throughout the present disclosure and designated by an instruction sequence of programs. The CPU 2212 may write the result back to the RAM 2214.

The CPU 2212 may search for information in a file, a database, or the like in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, read the attribute value of the second attribute stored in the entry, and read a second attribute value to acquire the attribute value of the second attribute associated with the first attribute satisfying the predetermined condition.

The program or software modules mentioned above may be stored in the computer readable media on the computer 2200 or of the computer 2200. A recording medium such as a hard disk or a RAM provided in a server system connected to a dedicated communication network or the Internet can be used as the computer readable media. The program may be provided to the computer 2200 by the recording medium.

While the present invention has been described by way of the embodiments, the technical scope of the present invention is not limited to the above described embodiments. It is apparent to persons skilled in the art that various alterations or improvements can be made to the above described embodiments. It is apparent from the description of the claims that embodiments added with such alterations or improvements can also be included in the technical scope of the present invention.

Note that the operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the operation flow is described by using phrases such as "first" or "next" in the scope of the claims, specification, or drawings, it does not necessarily mean that the process must be performed in this order.

EXPLANATION OF REFERENCES

10: calculation unit, 20: specification unit, 30: determination unit, 40: control unit, 50: input unit, 52: display unit, 60: storage unit, 70: liquid, 71: cation, 72: liquid, 73: liquid, 74: liquid, 75: liquid, 76: liquid, 77: gas, 78: gas, 79: anode chamber, 80: anode, 82: cathode, 84: ion exchange membrane, 86: anion group, 90: electrolyzer, 91: electrolysis cell, 92:

## EP 4 556 596 A1

induction piping, 93: induction piping, 94: discharge piping, 95: discharge piping, 97: temperature sensor, 98: cathode chamber, 99: concentration sensor, 100: operation support apparatus, 200: electrolytic apparatus, 210: terminal, 2200: computer, 2201: DVD-ROM, 2210: host controller, 2212: CPU, 2214: RAM, 2216: graphics controller, 2218: display device, 2220: input/output controller, 2222: communication interface, 2224: hard disk drive, 2226: DVD-ROM drive, 2230: ROM, 2240: input/output chip, 2242: keyboard.

## Claims

1. An operation support apparatus comprising:

   a calculation unit which calculates, based on an electricity cost or an amount of power consumption for each of predetermined times associated with operation of a plurality of electrolyzers operating in parallel, an amount of production of a product for each of the times that satisfies a target amount of production of the product, the product being produced by the plurality of electrolyzers over a predetermined period of time; and
   a specification unit which specifies an electrolyzer to be operated among the plurality of electrolyzers, based on the amount of production calculated by the calculation unit.

2. The operation support apparatus according to claim 1, wherein
   the calculation unit calculates the amount of production that satisfies the target amount of production of the product over the period of time and that minimizes an electricity cost or an amount of power consumption over the period of time.

3. The operation support apparatus according to claim 1 or 2, further comprising a determination unit, wherein

   the calculation unit calculates, for each of the times, a first value of current to be applied to the plurality of electrolyzers, based on the amount of production of the product, and
   the calculation unit calculates a second value of current to be applied to the plurality of electrolyzers, based on an impurity concentration in the product or on a temperature of an electrolytic solution decomposed by the electrolyzers,
   the determination unit determines a magnitude relation between the first value of current and the second value of current for each of the times calculated by the calculation unit, and determines a magnitude relation between the first value of current for each of the times and a predetermined fourth value of current to be applied to the plurality of electrolyzers, and
   if the determination unit determines that the first value of current is equal to or smaller than the fourth value of current and determines that the first value of current is smaller than the second value of current during a first time which is at least one of the times, or if the determination unit determines that the first value of current is equal to or greater than the second value of current and determines that the first value of current is greater than the fourth value of current during a second time which is at least one of the times, the specification unit specifies one electrolyzer to be stopped among the plurality of electrolyzers.

4. An operation support apparatus comprising:

   a calculation unit which calculates, based on an amount of power consumption for each of predetermined times associated with operation of a plurality of electrolyzers operating in parallel, an amount of production of a product for each of the times that satisfies a target amount of production of the product, the product being produced by the plurality of electrolyzers over a predetermined period of time, calculates, for each of the times, a first value of current to be applied to the plurality of electrolyzers, based on the amount of production that has been calculated, and calculates a second value of current to be applied to the plurality of electrolyzers, based on an impurity concentration in the product or on a temperature of an electrolytic solution decomposed by the electrolyzers;
   a determination unit which determines a magnitude relation between the first value of current and the second value of current for each of the times calculated by the calculation unit, and determines a magnitude relation between the first value of current for each of the times and a predetermined fourth value of current to be applied to the plurality of electrolyzers; and
   a specification unit which specifies one electrolyzer to be stopped among the plurality of electrolyzers, if the determination unit determines that the first value of current is equal to or smaller than the fourth value of current and determines that the first value of current is smaller than the second value of current during a first time which is at least one of the times, or if the determination unit determines that the first value of current is equal to or greater than the second value of current and determines that the first value of current is greater than the fourth value of current during a second time which is at least one of the times.

5. The operation support apparatus according to claim 3 or 4, further comprising a control unit which controls currents flowing through the plurality of electrolyzers, wherein
if the determination unit determines that the first value of current is equal to or greater than the second value of current and is equal to or smaller than a fourth value of current, the control unit controls the currents flowing through the plurality of electrolyzers to the first value of current.

6. The operation support apparatus according to claim 5, wherein

the determination unit acquires a time elapsed since it was determined that the first value of current is equal to or greater than the second value of current and is equal to or smaller than the fourth value of current,
the determination unit determines a magnitude relation between the time elapsed and a predetermined time, and
if the determination unit determines that the time elapsed is longer than the predetermined time, the control unit outputs information related to whether operation conditions of the plurality of electrolyzers are to be changed.

7. The operation support apparatus according to claim 5 or 6, wherein
if the determination unit determines that the first value of current is smaller than the second value of current during the first time and determines that the first value of current is greater than the fourth value of current during the second time, the calculation unit further calculates, for each of the times, the value of current to be applied to the plurality of electrolyzers by setting the currents flowing through the plurality of electrolyzers during the first time to the second value of current or by setting the currents flowing through the plurality of electrolyzers during the second time to the fourth value of current.

8. The operation support apparatus according to claim 7, wherein

the determination unit determines a magnitude relation between a first difference between the second value of current and the first value of current during the first time, and a second difference between the first value of current and the fourth value of current during the second time, and
if the determination unit determines that the first difference is greater than the second difference, the calculation unit further calculates, for each of the times, the value of current by setting the currents flowing through the plurality of electrolyzers during the first time to the second value of current, and if it is determined that the second difference is greater than the first difference, the calculation unit further calculates, for each of the times, the value of current by setting the currents flowing through the plurality of electrolyzers during the second time to the fourth value of current.

9. The operation support apparatus according to claim 3 or 4, further comprising a control unit which controls currents flowing through the plurality of electrolyzers, wherein

the calculation unit further calculates, for each of the times, a third value of current for a case where the one electrolyzer has been stopped,
the determination unit determines a magnitude relation between the third value of current and the fourth value of current, and
if the determination unit determines that the third value of current is equal to or smaller than the fourth value of current, the control unit controls the currents flowing through the plurality of electrolyzers to the third value of current.

10. The operation support apparatus according to claim 9, wherein

the determination unit further determines a magnitude relation between the third value of current and the second value of current, and
if the determination unit determines that the third value of current is equal to or smaller than the fourth value of current and is equal to or greater than the second value of current, the control unit controls the currents flowing through the plurality of electrolyzers to the third value of current.

11. The operation support apparatus according to claim 10, wherein
if the determination unit determines that the third value of current is smaller than the second value of current during at least one of the times, the specification unit further specifies another electrolyzer to be stopped among the plurality of electrolyzers.

12. The operation support apparatus according to claim 11, wherein
the calculation unit further calculates, for each of the times, a value of current for a case where the one electrolyzer and the another electrolyzer have been stopped, as the third value of current.

13. The operation support apparatus according to claim 12, wherein
if the specification unit specifies all of the plurality of electrolyzers as electrolyzers to be stopped, the calculation unit further calculates, for each of the times, the value of current to be applied to the plurality of electrolyzers by setting the currents flowing through the plurality of electrolyzers to the second value of current or the fourth value of current.

14. The operation support apparatus according to any one of claims 9 to 13, wherein
if the determination unit determines that the third value of current is greater than the fourth value of current during at least one of the times, the calculation unit further calculates, for each of the times, the value of current to be applied to the plurality of electrolyzers by setting the currents flowing through the plurality of electrolyzers during at least one of the predetermined times to the fourth value of current.

15. The operation support apparatus according to any one of claims 9 to 14, wherein

the determination unit determines whether a concentration of the product in an aqueous solution of the product is higher than a predetermined first concentration, and determines whether the impurity concentration in the product is lower than a predetermined second concentration, and
if the determination unit determines that the concentration of the product is higher than the first concentration and is lower than the second concentration, the control unit controls a current flowing through the one electrolyzer to be smaller than a current flowing through another of the electrolyzers.

16. The operation support apparatus according to any one of claims 5 to 15, wherein

the determination unit determines a magnitude relation between the amount of power consumption for each of the times and an available amount of power supply to the electrolyzers for each of the times,
the calculation unit calculates an amount of surplus power that is a difference between the available amount of power supply and the amount of power consumption, during one of the times for which it is determined that the amount of power consumption is smaller than the available amount of power supply, and
the control unit controls power supplied to the electrolyzers to be power including the amount of surplus power, during another of the times for which it is determined that the amount of power consumption is equal to or greater than the available amount of power supply.

17. The operation support apparatus according to any one of claims 1 to 16, further comprising a display unit which displays the amount of power consumption.

18. A operation support method comprising:

performing first calculation by calculating, by a calculation unit and based on an electricity cost or an amount of power consumption for each of predetermined times associated with operation of a plurality of electrolyzers operating in parallel, an amount of production of a product for each of the times that satisfies a target amount of production of the product, the product being produced by the plurality of electrolyzers over a predetermined period of time; and
specifying, by a specification unit, an electrolyzer to be operated among the plurality of electrolyzers, based on the amount of production calculated in the performing the first calculation.

19. The operation support method according to claim 18, wherein
the performing the first calculation is calculating, by the calculation unit, the amount of production that satisfies the target amount of production of the product over the period of time and that minimizes an electricity cost or an amount of power consumption over the period of time.

20. The operation support method according to claim 18 or 19, further comprising:

performing second calculation by calculating, by the calculation unit and for each of the times, a first value of current to be applied to the plurality of electrolyzers, based on the amount of production of the product;

performing third calculation by calculating, by the calculation unit, a second value of current to be applied to the plurality of electrolyzers, based on an impurity concentration in the product or on a temperature of an electrolytic solution decomposed by the electrolyzers;

performing first determination by determining, by a determination unit, a magnitude relation between the first value of current for each of the times calculated in the performing the second calculation and the second value of current calculated in the performing the third calculation; and

performing second determination by determining, by the determination unit, a magnitude relation between the first value of current for each of the times calculated in the performing the second calculation and a predetermined fourth value of current to be applied to the plurality of electrolyzers, if it is determined, in the performing the first determination, that the first value of current during a first time which is at least one of the times is smaller than the second value of current, wherein

the specifying the electrolyzer is specifying, by the specification unit, one electrolyzer to be stopped among the plurality of electrolyzers, if it is determined, in the performing the second determination, that the first value of current is equal to or smaller than the fourth value of current.

21. The operation support method according to claim 20, further comprising performing third determination by determining, by the determination unit, a magnitude relation between the first value of current for each of the times calculated in the performing the second calculation and a predetermined fourth value of current to be applied to the plurality of electrolyzers, if it is determined, in the performing the first determination, that the first value of current for each of the times is equal to or greater than the second value of current, wherein

the specifying the electrolyzer is specifying, by the specification unit, one electrolyzer to be stopped among the plurality of electrolyzers, if it is determined, in the performing the third determination, that the first value of current during a second time which is at least one of the times is greater than the fourth value of current.

22. An operation support method comprising:

performing first calculation by calculating, by a calculation unit and based on an amount of power consumption for each of predetermined times associated with operation of a plurality of electrolyzers operating in parallel, an amount of production of a product for each of the times that satisfies a target amount of production of the product, the product being produced by the plurality of electrolyzers over a predetermined period of time;

performing second calculation by calculating, by a calculation unit and for each of the times, a first value of current to be applied to the plurality of electrolyzers, based on the amount of production calculated in the performing the first calculation;

performing third calculation by calculating, by a calculation unit, a second value of current to be applied to the plurality of electrolyzers, based on an impurity concentration in the product or on a temperature of an electrolytic solution decomposed by the electrolyzers;

performing first determination by determining, by a determination unit, a magnitude relation between the first value of current for each of the times calculated in the performing the second calculation and the second value of current calculated in the performing the third calculation;

performing second determination by determining, by the determination unit, a magnitude relation between the first value of current for each of the times calculated in the performing the second calculation and a predetermined fourth value of current to be applied to the plurality of electrolyzers, if it is determined, in the performing the first determination, that the first value of current during a first time which is at least one of the times is smaller than the second value of current; and

specifying, by a specification unit, one electrolyzer to be stopped among the plurality of electrolyzers, if it is determined, in the performing the second determination, that the first value of current is equal to or smaller than the fourth value of current.

23. The operation support method according to claim 22, further comprising:

performing third determination by determining, by the determination unit, a magnitude relation between the first value of current for each of the times calculated in the performing the second calculation and a predetermined fourth value of current to be applied to the plurality of electrolyzers, if it is determined, in the performing the first determination, that the first value of current for each of the times is equal to or greater than the second value of current; and

specifying, by a specification unit, one electrolyzer to be stopped among the plurality of electrolyzers, if it is determined, in the performing the third determination, that the first value of current during a second time which is at least one of the times is greater than the fourth value of current.

24. The operation support method according to claim 21 or 23, further comprising controlling, by a control unit, currents flowing through the plurality of electrolyzers to the first value of current, if it is determined, in the performing the first determination, that the first value of current is equal to or greater than the second value of current and it is determined, in the performing the third determination, that the first value of current is equal to or smaller than the fourth value of current.

25. The operation support method according to claim 24, further comprising:

acquiring, by the determination unit, a time elapsed since it was determined in the performing the third determination that the first value of current is equal to or smaller than the fourth value of current;
determining a time by determining, by the determination unit, a magnitude relation between the time elapsed acquired in the acquiring the time elapsed and a predetermined time; and
outputting, by the control unit, information related to whether operation conditions of the plurality of electrolyzers are to be changed, if it is determined, in the determining the time, that the time elapsed is longer than the predetermined time.

26. The operation support method according to claim 24 or 25, wherein
the performing the second calculation is further calculating, by the calculation unit and for each of the times, the value of current to be applied to the plurality of electrolyzers by setting the currents flowing through the plurality of electrolyzers during the first time to the second value of current or by setting the currents flowing through the plurality of electrolyzers during the second time to the fourth value of current, if it is determined, in the performing the first determination, that the first value of current during the first time is smaller than the second value of current and it is determined, in the performing the second determination, that the first value of current during the second time is greater than the fourth value of current.

27. The operation support method according to claim 26, further comprising performing fourth determination by determining, by the determination unit, a magnitude relation between a first difference between the second value of current and the first value of current during the first time, and a second difference between the first value of current and the fourth value of current during the second time, wherein

the performing the second calculation is further calculating, by the calculation unit and for each of the times, the value of current by setting the currents flowing through the plurality of electrolyzers during the first time to the second value of current, if it is determined, in the performing the fourth determination, that the first difference is greater than the second difference, and
the performing the second calculation is further calculating, by the calculation unit and for each of the times, the value of current by setting the currents flowing through the plurality of electrolyzers during the second time to the fourth value of current, if it is determined, in the performing the fourth determination, that the second difference is greater than the first difference.

28. The operation support method according to any one of claims 20 to 23, further comprising:

performing fourth calculation by further calculating, by the calculation unit and for each of the times, a third value of current for a case where the one electrolyzer specified in the specifying the electrolyzer has been stopped;
performing fifth determination by determining, by the determination unit, a magnitude relation between the third value of current and the fourth value of current; and
controlling, by a control unit, currents flowing through the plurality of electrolyzers to the third value of current, if it is determined, in the performing the fifth determination, that the third value of current is equal to or smaller than the fourth value of current.

29. The operation support method according to claim 28, further comprising performing sixth determination by determining, by the determination unit, a magnitude relation between the third value of current and the second value of current, wherein
the controlling is controlling, by the control unit, the currents flowing through the plurality of electrolyzers to the third value of current, if it is determined, in the performing the fifth determination, that the third value of current is equal to or smaller than the fourth value of current and it is determined, in the performing the sixth determination, that the third value of current is equal to or greater than the second value of current.

30. The operation support method according to claim 29, wherein
the specifying the electrolyzer is further specifying, by the specification unit, another electrolyzer to be stopped among the plurality of electrolyzers, if it is determined, in the performing the sixth determination, that the third value of current during at least one of the times is smaller than the second value of current.

31. The operation support method according to claim 30, wherein
the performing the fourth calculation is further calculating, by the calculation unit and for each of the times, a value of current for a case where the one electrolyzer and the another electrolyzer have been stopped, as the third value of current.

32. The operation support method according to claim 31, wherein
the performing the second calculation is further calculating, by the calculation unit and for each of the times, the value of current to be applied to the plurality of electrolyzers by setting the currents flowing through the plurality of electrolyzers to the second value of current, if all of the plurality of electrolyzers are specified, in the specifying the electrolyzer, as electrolyzers to be stopped.

33. The operation support method according to any one of claims 28 to 32, wherein
the performing the second calculation is further calculating, by the calculation unit and for each of the times, the value of current to be applied to the plurality of electrolyzers by setting the currents flowing through the plurality of electrolyzers during at least one of the predetermined times to the fourth value of current, if it is determined, in the performing the fifth determination, that the third value of current during the at least one of the times is greater than the fourth value of current.

34. The operation support method according to any one of claims 28 to 33, further comprising performing seventh determination by determining, by the determination unit, whether a concentration of the product in an aqueous solution of the product is higher than a predetermined first concentration and whether an impurity concentration in the product is lower than a predetermined second concentration, wherein
the controlling is controlling, by the control unit, a current flowing through the electrolyzer to be stopped that has been specified in the specifying the electrolyzer, to be smaller than a current flowing through another of the electrolyzers, if it is determined, in the performing the seventh determination, that the concentration of the product is higher than the first concentration and is lower than the second concentration.

35. The operation support method according to any one of claims 24 to 34, further comprising:

determining, by the determination unit, a magnitude relation between the amount of power consumption for each of the times and an available amount of power supply to the electrolyzers for each of the times;
calculating, by the calculation unit, an amount of surplus power that is a difference between the available amount of power supply and the amount of power consumption, during one of the times for which it is determined that the amount of power consumption is smaller than the available amount of power supply; and
controlling, by the control unit, power supplied to the electrolyzers to be power including the amount of surplus power, during another of the times for which it is determined that the amount of power consumption is equal to or greater than the available amount of power supply.

36. An operation support program that causes a computer to function as an operation support apparatus according to any one of claims 1 to 17.

200

*FIG.1*

200

*FIG.2*

*FIG.3*

FIG.4

FIG.5

*FIG.6*

52

RATED AMOUNT OF ELECTRICITY: XXX kw/DAY

AMOUNT OF ELECTRICITY
IN OPTIMAL OPERATION: YYY kw/DAY

*FIG.7*

FIG.8

*FIG.9*

*FIG.10*

90-1　90-2　　　90-M

91

|  | ELEC-TROLYZER 90-1 | ELEC-TROLYZER 90-2 | ... | ELEC-TROLYZER 90-M |
|---|---|---|---|---|
| NUMBER OF PAIRS | N1 | N2 | ... | Nm |
| CURRENT | I1 | I2 | ... | Im |
| AVERAGE VOLTAGE CV | CV1 | CV2 | ... | CVm |
| VOLTAGE | N1CV1 | N2CV2 | ... | NmCVm |

*FIG.11*

ONE ELECTROLYZER 90

| NUMBER OF PAIRS | $N = N1 + N2 + \cdots + Nm$ |
|---|---|
| CURRENT | $I$ (WHEN $I1 = I2 = \cdots = Im$) |
| AVERAGE VOLTAGE CV | $(N1CV1 + N2CV2 + \cdots + NmCVm)/m$ |
| VOLTAGE | $(N1CV1 + N2CV2 + \cdots + NmCVm)$ |

*FIG.12*

FIG.13

FIG.14

*FIG.15*

*FIG.16*

FIG.17

*FIG.18*

FIG.19

FROM JUDGEMENT STEP S94

ELAPSED TIME ACQUISITION STEP — S120

TIME
DETERMINATION STEP
(HAS PREDETERMINED TIME
ELAPSED ?) — S122

No

Yes

INFORMATION OUTPUT STEP — S124

TO ZEROTH DETERMINATION STEP S100

*FIG.20*

FROM SECOND DETERMINATION STEP S112                                                S200

STOP STEP

TIME SPECIFICATION STEP — S210

ELECTROLYZER SPECIFICATION STEP — S212

FOURTH CALCULATION STEP — S214

FIFTH DETERMINATION STEP — S216
(MAGNITUDE RELATION BETWEEN Iv4 AND Iv3 IS DETERMINED)   Iv3 > Iv4 → FOURTH CURRENT SETTING STEP — S137 → TO SECOND CALCULATION STEP S106

Iv3 ≦ Iv4

SIXTH DETERMINATION STEP — S218
(MAGNITUDE RELATION BETWEEN Iv2 AND Iv3 IS DETERMINED)   Iv3 ≧ Iv2 → SEVENTH DETERMINATION STEP — S220
(IS CONCENTRATION Cho HIGHER THAN FIRST CONCENTRATION C1 AND IS CONCENTRATION Cs LOWER THAN SECOND CONCENTRATION Cs ?)   No

Iv3 < Iv2

Yes

CIRCULATION WAITING STEP — S222      DISCHARGE STEP
                                     S224

JUDGEMENT STEP — S226
NOT SPECIFIED ← (HAVE ALL ELECTROLYZERS BEEN SPECIFIED ?)

SPECIFIED

FIFTH CURRENT SETTING STEP — S138

TO SECOND CALCULATION STEP S106

TO CONTROL STEP S112

*FIG.21*

FROM THIRD CALCULATION STEP S108

↓

S302

MAGNITUDE
RELATION DETERMINATION STEP
(MAGNITUDE RELATION BETWEEN Ec
AND Es IS DETERMINED)

$Ec \geq Es$ →

SECOND TIME SPECIFICATION STEP
(ANOTHER TIME T DURING WHICH Ec IS
EQUAL TO OR GREATER THAN Es IS SPECIFIED) — S306

$Ec < Es$
↓

FIRST TIME SPECIFICATION STEP
(ONE TIME T DURING WHICH Ec IS
SMALLER THAN Es IS SPECIFIED) — S304

↓

AMOUNT OF
SURPLUS POWER CALCULATION STEP
(Em IS CALCULATED DURING ONE TIME T) — S308

↓

POWER CONTROL STEP
(POWER IS CONTOLLED TO BE POWER
INCLUDING Em DURING ANOTHER TIME T) — S310

↓

TO FIRST DETERMINATION STEP S110

*FIG.22*

FIG.23

<div align="center">

**INTERNATIONAL SEARCH REPORT**

</div>

| International application No. |
|---|
| **PCT/JP2023/025501** |

**A. CLASSIFICATION OF SUBJECT MATTER**

*C25B 15/00*(2006.01)i; *C25B 1/04*(2021.01)i; *C25B 1/46*(2006.01)i; *C25B 9/00*(2021.01)i; *C25B 15/023*(2021.01)i; *G05B 19/418*(2006.01)i

FI: C25B15/00 302Z; C25B1/04; C25B1/46; C25B9/00 E; C25B15/00 303; C25B15/023; G05B19/418 Z

According to International Patent Classification (IPC) or to both national classification and IPC

**B. FIELDS SEARCHED**

Minimum documentation searched (classification system followed by classification symbols)

C25B1/00-15/08; G05B19/418

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-31813 A (HONDA MOTOR CO LTD) 08 February 2007 (2007-02-08) | 1-36 |
| A | JP 2021-181605 A (TOYOTA CENTRAL RES & DEV) 25 November 2021 (2021-11-25) | 1-36 |
| A | JP 2020-84259 A (TOYOTA CENTRAL RES & DEV) 04 June 2020 (2020-06-04) | 1-36 |
| A | JP 2005-126792 A (ISHIKAWAJIMA HARIMA HEAVY IND CO LTD) 19 May 2005 (2005-05-19) | 1-36 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 August 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/025501**

| Patent document cited in search report | | | Publication date (day/month/year) | Patent family member(s) | Publication date (day/month/year) |
|---|---|---|---|---|---|
| JP | 2007-31813 | A | 08 February 2007 | (Family: none) | |
| JP | 2021-181605 | A | 25 November 2021 | (Family: none) | |
| JP | 2020-84259 | A | 04 June 2020 | (Family: none) | |
| JP | 2005-126792 | A | 19 May 2005 | (Family: none) | |

Form PCT/ISA/210 (patent family annex) (January 2015)

**REFERENCES CITED IN THE DESCRIPTION**

**Patent documents cited in the description**

- WO 2019059321 A